(19) Europäisches Patentamt

European Patent Office

Office européen des brevets

(11) EP 1 065 818 A1

(12) EUROPEAN PATENT APPLICATION
published in accordance with Art. 158(3) EPC

(43) Date of publication:
03.01.2001 Bulletin 2001/01

(51) Int. Cl.⁷: H04J 11/00, H04J 1/00

(21) Application number: 99959884.0

(22) Date of filing: 17.12.1999

(86) International application number:
PCT/JP99/07107

(87) International publication number:
WO 00/36776 (22.06.2000 Gazette 2000/25)

(84) Designated Contracting States:
AT BE CH CY DE DK ES FI FR GB GR IE IT LI LU
MC NL PT SE

(30) Priority: 17.12.1998 JP 35852998
28.01.1999 JP 1975599

(71) Applicant:
MITSUBISHI DENKI KABUSHIKI KAISHA
Tokyo 100-8310 (JP)

(72) Inventors:
• KOBAYASHI, Tsuyoshi
  Chiyoda-ku, Tokyo 100-8310 (JP)
• MATSUMOTO, Wataru
  Chiyoda-ku, Tokyo 100-8310 (JP)
• KOIZUMI, Yoshiaki
  Chiyoda-ku, Tokyo 100-8310 (JP)
• HIGUMA, Toshiyasu
  Chiyoda-ku, Tokyo 100-8310 (JP)
• INOUE, Masahiro
  Chiyoda-ku, Tokyo 100-8310 (JP)
• KATO, Masataka
  Chiyoda-ku, Tokyo 100-8310 (JP)
• ANDO, Yasuomi
  Chiyoda-ku, Tokyo 100-8310 (JP)

(74) Representative:
Pfenning, Meinig & Partner
Mozartstrasse 17
80336 München (DE)

(54) **TRANSMITTING METHOD AND TRANSMITTING DEVICE**

(57) A unit judging that it is difficult to continue communication through a present tone set/tone position in accordance with a noise measurement result serves as a virtual master for changing tones. The virtual-master unit transmits a tone-change request command and waits for a response from other unit(s) for a certain time. During the above period, when receiving a tone-change rejection command even once, the virtual-master unit stops a change and completes virtual-master processing. However, when receiving no tone-change rejection command even after a certain time elapses, the virtual-master unit transmits a tone-change instruction command. Then, all units presently connected simultaneously change tones when receiving the tone-instruction command.

FIG.9

EP 1 065 818 A1

**Description**

TECHNICAL FIELD

The present invention relates to a communication system and a communication method using a multicarrier modulation-demodulation mode. Particularly, this invention relates to a communication method that makes it possible to realize data communication using an existing power line in accordance with a DMT (Discrete Multi Tone) modulation-demodulation mode or OFDM (Orthogonal Frequency Division Multiplex) modulation-demodulation mode. Further, this invention relates to a communication system that makes it possible to realize the above-mentioned communication method. However, the present invention can be applied not only to a communication system for performing power line communication in accordance with the DMT modulation-demodulation mode but also to every communication system for performing cable communication and radio communication through a normal communication line in accordance with the multicarrier modulation-demodulation mode and single-carrier modulation-demodulation mode.

BACKGROUND ART

A conventional communication method is described below. A "power-line modem" which performs communication by using an existing power line without using a new communication line is recently gathering interests because it reduce the cost and uses the existing equipment effectively. Such a power-line modem performs various processing such as electrical appliance control and data communication by networking electrical appliances inside and outside of houses and in buildings, factories, and shops connected by power lines.

A power-line modem using an SS (Spread Spectrum) mode can be considered at present. However, when using this mode, the following problems occur. That is, it is difficult to coexist with other communication modes because a spectrum completely covering a given band and a transfer rate for a band used is too low. Moreover, when using an existing power line whose main purpose is not for data communication by the power-line modem for data communication, it is necessary to take action against noises caused by various units connected for load dispatching.

The conventional example described above performs power-line communication using single carriers. Therefore, for example, when noises from a power line are superimposed on a single-carrier communication frequency, a problem occurs that preferable communication cannot be made. Particularly, because communication is performed by using power lines for buildings, houses, and factories in the case of power-line communication, it is necessary to consider noises from various electrical appliances connected to the power lines. Therefore, taking action against these noises is indispensable.

Moreover, in the case of the conventional example, the DMT modulation-demodulation mode using a plurality of tones (also referred to as carriers or subcarriers) is considered to prevent noises. In general, however, noises on a power line may concentrate in a specific band. Therefore, when concentrating a plurality of tones in a specific band, a problem occurs that all tones are broken by noises and thereby, a state in which no communication can be made occurs.

Furthermore, in the case of conventional power-line communication using the DMT modulation-demodulation mode, only several tones at an equal interval are selected out of multitones densely generated over a very-wide frequency band to transfer data by using the selected tones. Thereby, it is possible to disperse tones in a wide frequency band and even when densely concentrated noises are present in a specific band, it is possible to avoid the noises. Therefore, it is possible to perform preferable communication. In this case, however, it is necessary to previously know the intensity of noises and a band used by other system. Moreover, to judge positions and intensity of noises over an assumed entire frequency band, a lot of time and high-speed processing are necessary. Therefore, problems occur that communication overhead increases and the real cost increases.

Furthermore, the above conventional communication mode (corresponding to the above multicarrier modulation-demodulation mode and single-carrier modulation-demodulation mode) has a problem that communication between a pair of units is possible but N-to-N communication cannot be performed at the same time.

Furthermore, the conventional communication mode has a problem that, after tone positions are changed to avoid noises, a newly-connected unit cannot detect the tone position at the moving destination and therefore, communication cannot be performed.

It is an object of the present invention to provide a communication method according to the DMT modulation-demodulation mode that makes it possible to realize communication avoiding a band in which noises are present by judging presence or absence of noises during communication even when noises concentrate on a specific position or other system already uses a specific band for communication and moreover, realize inexpensive and secure data communication and a communication system using the communication method.

It is another object of the present invention to provide a communication method according to the DMT modulation-demodulation mode that makes it possible to realize N-to-N simultaneous communication between a plurality of units and more effectively use a transmission line and a communication system using the communication method.

It is still another object of the present invention to provide a communication method that makes it possible to change tone positions for a plurality of units connected on a transmission line (power line) to simultaneously perform communication and making it possible that a newly-connected unit perform communication by securely following a tone change after the tone-position change and a communication system using the communication method.

DISCLOSURE OF THE INVENTION

A communication method according to one aspect of the present invention using a multicarrier modulation-demodulation mode is characterized by including a first step in which transmission side encodes the same data to n (natural number such that $m>n\geq2$) tones in a specific tone set constituted of m (natural number such that $m\geq3$) tones at a predetermined frequency interval and transmits encoded multitone data; a second step in which reception side receiving the multitone data instructs the transmission side and other unit to change at least one of the n tones when the reception side cannot decode the encoded data with some or all of the n tones or the decoding is difficult; and a third step in which the transmission side receiving a tone-change instruction, the other unit, and the reception side instructing a tone change tones in accordance with the instruction and perform subsequent communication with a changed tone.

According to the above invention, tone positions are changed by communication systems of transmission and reception sides and subsequent data transfer is continued at a changed tone position. That is, when it is impossible to decode some or the whole of data in a predetermined tone set encoded in accordance with the multicarrier modulation-demodulation mode, the data is securely decoded by the reception side by changing at least one frequency of each tone constituting the predetermined tone set.

Further, the communication method is characterized in that, when the transmission side, the other unit, and the reception side change at least one of the n tones, they transmit the encoded multitone data again by using remaining tones in the tone set in the third step.

According to the above invention, even when changing tone positions, two tones are always common with a tone at a default and moreover, even while tone settings are changed, it is possible to perform communication by using the two tones. Therefore, it is possible to change tone sets without interrupting communication.

Further, the communication method is characterized by further including a fourth step in which reception side receiving the multitone data judges a change-destination tone set and instructs transmission side and other unit to change tone sets when the reception side cannot decode the encoded data even by using any tone in the tone set or the decoding is difficult after the processing in the third step and a fifth step in which the transmission side receiving the tone-set change instruction, the other unit, and the reception side instructing the tone set change tone sets in accordance with the tone-set change instruction and perform subsequent communication with a changed tone set.

According to the above invention, it is possible to perform power-line communication stronger in noises because tone sets are changed when secure communication cannot be made even after combinations of tone positions are changed in a specific tone set.

Further, the communication method is characterized in that units of transmission and reception sides to be communicated each other use the specific tone set in order to determine a tone set used for transceiving of data and transceive data by using a tone set other than the specific tone set and a tone set presently communicated between other units on the same transmission line.

According to the invention, N-to-N simultaneous communication is realized and power-line utilization efficiency is improved because a tone set used for communication between communication systems depends on a combination between communication systems and frequency bands used for communication do not duplicate and thereby, different units do not interfere each other even when transmitting data to a transmission line at the same time.

A communication method according to another aspect of the present invention using a multicarrier modulation-demodulation mode is characterized by including a first step in which transmission side encodes the same data to a specific tone set constituted of m (natural number such that $m\geq3$) tones at a predetermined frequency interval and transmits encoded multitone data and a second step in which reception side receiving the multitone data decodes the encoded data by using n (natural number such that $m>n\geq2$) tones in a specific tone set, changes at least one of the n tones when the encoded data cannot be decoded with some or all of the n tones or the decoding is difficult and thereafter, decodes the encoded data again by using n changed tones.

According to the above invention, it is possible to change tone positions in accordance with decision of the reception side and moreover, it is unnecessary to exchange request and acknowledgment control codes between communication systems. Therefore, it is possible to more quickly change a tone position to another tone position less influenced by noises.

Further, the communication method is characterized in that the second step decodes ended data again by using remaining tones in the tone set when changing at least one of the n tones.

According to the above invention, when changing a tone position, because two tones are always common with a tone at a default and moreover, communication can be performed by using the two tones even while tone settings are changed, it is possible to perform a tone sets change processing change tone sets without interrupting communication.

Further, the communication method of still another aspect of the present invention is characterized by further including a third step of judging change-destination tone sets when the encoded data cannot be decoded even by using any tone in the tone set through the processing in the second step or the decoding is difficult and instructing the transmission side and other unit to change tone sets and a fourth step in which the transmission side receiving a tone-set change instruction, the other unit, and the reception side instructing a change of tone sets change tone sets in accordance with the instruction and perform subsequent communication with a changed tone set.

According to the above invention, power-line communication stronger in noises is realized because tone sets are changed when secure communication cannot be made even after combinations of tone positions are changed in a specific tone set.

Further, the communication method is characterized in that units of transmission and reception sides to be communicated each other use the specific tone set in order to determine a tone set used for transceiving of data and transceive data by using a tone set other than the specific tone set and a tone set presently communicated between other units on the same transmission line.

According to the above invention, N-to-N simultaneous communication is realized and power-line utilization efficiency is improved because a tone set used for communication between communication systems depends on a combination between communication systems and frequency bands used for communication do not duplicate and thereby, different units do not interfere each other even when transmitting data to a transmission line at the same time.

Further, the communication method is characterized in that the second step decodes encoded data by using the m tones when receiving first multitone data, detects n optimum tones, then decodes the encoded data by using the n detected tones, changes at least one of the n tones when the encoded data cannot be decoded by some or all of the n tones, and decodes the encoded data again by using n changed tones.

According to the above invention, communication can be performed more quickly under better conditions because an optimum tone position is detected at the first reception without previously determining a default tone position.

Further, the communication method is characterized by further including a third step of judging a change-destination tone set when the encoded data cannot decoded by the processing in the second step even by using any tone in the tone set or the decoding is difficult and instructing the transmission side and other unit to change tone sets and a fourth step in which the transmission side receiving a tone-set change instruction, the other unit, and the reception side instructing a tone-set change tone sets in accordance with the instruction and perform subsequent communication with a changed tone set.

According to the above invention, power-line communication stronger in noises is realized because tone sets are changed when secure communication cannot be made even after changing combinations of tone positions in a specific tone set.

A communication method according to still another aspect of the present invention is characterized by including a first step in which the multicarrier modulation-demodulation mode is used and transmission side encodes the same data to n (natural number such that m>n≥2) tones in a specific tone set constituted of m (natural number such that m≥3) at a predetermined frequency interval and transmits encoded multitone data; a second step in which reception side receiving the multitone data requests a tone change to the transmission side and other unit connected to the same transmission line when the encoded data cannot be decoded by some or all of the n tones or the decoding is difficult; a third step in which the transmission side receiving the tone change request and the other unit respectively designate and return an optimum tone to the reception-side unit; a fourth step in which the reception side to which the optimum tone is designated determines a tone to be changed in accordance with the information and communicates a determined tone to the transmission side and other unit; and a fifth step in which the transmission side, reception side, and other unit change tones in accordance with the determination and perform subsequent communication with a changed tone.

According to the above invention, preferable communication can be performed not only between communication systems presently communicated but also with other communication systems with which communication may be thereafter performed because all power-line modems further simultaneously move tone sets.

A communication method according to still another aspect of the present invention is characterized in that a plurality of communication systems connected to the same transmission line transceive multitone data constituted of a plurality of predetermined tones at a specific frequency interval by using a multicarrier modulation-demodulation mode, moreover when a communication system judging that decoding cannot be made by some or all of the tones or the decoding is difficult becomes a master, the communication system serving as the master transmits a tone-change request command showing a change-destination tone, and when receiving a tone-change rejection command from at least one of other communication systems in a certain time, completes the tone change and master processing at this point of time, but unless receiving the tone-change rejection command in a certain time, the master transmits the tone-change designation command showing the change-destination tone and moves a tone used to transceive data to the change destination, and all communication systems other than the master receive the tone-change designation command and thereafter, simultaneously move tones used to transceive data to the change destination.

According to the above invention, a communication system requesting a change of tone sets or tone positions serves as a virtual master among communication systems presently performing communication by being connected to the same transmission line, the communication system serving as the virtual master transmits a tone-change request to communication systems other than the virtual master, and changes tone sets or tone positions in accordance with reactions of the communication system other than the virtual master. Thereby, it is possible to securely change tone sets or tone positions in accordance with a state of each communication system.

Further, the communication method is characterized by using n (natural number such that m>n≥2) tones in a predetermined tone set constituted of m (natural number equal of m≥3) tones at a specific frequency interval to transceive data and encoding the same data to the n tones.

According to the above invention, a combination of three low-frequency-side tones in a tone set is defined as Low, a combination of three central tones is defined as Center, and a combination of three high-frequency-side tones is defined as High; and specific tone set and tone position are selected and the same data is encoded to the three selected tones to transfer data.

Further, the communication method is characterized in that when at least one of communication systems other than the master transmits a tone-change rejection command in the certain time, other communication systems other than the master cancel the transmission of tone-change rejection commands of their own.

According to the above invention, tones can be more quickly changed because it is possible to prevent a tone-change command from being transmitted several times.

Further, the communication method of still another aspect of the present invention is characterized in that a default tone set showing an initial-state tone set and a default tone position which is a combination of initial-state tones in the default tone set are previously defined and the communication system performs carrier sense of the default tone position whenever data is not transceived before tones change processing and moreover performs carrier sense of a tone position used to transceive data in addition to carrier sense of the default tone position after tones change processing.

According to the above invention, it is possible to detect whether any data is transmitted in frequency bands of a presently-used tone set/tone position and a default tone set/tone position. In this case, carrier detection is always performed for the default tone set/tone position and when ton sets or tone positions are changed, carrier detection is also applied to a tone frequency presently communicated.

Further, the communication method of still another aspect of the present invention is characterized by transmitting data through the changed tone when a communication system transmits data after the tone change and at the same time, transmits a dummy carrier to the default tone position.

According to the above invention, when it is judged whether tone sets or tone positions are changed and resultantly, they are changed, a dummy carrier is output to a tone constituting a default tone set/tone position. The dummy carrier is necessary for a newly-connected unit to transmit a default tone set/tone portion when inquiring about a present tone set/tone position.

Further, the communication method is characterized by performing reception through the change-destination tone position when a carrier is detected through the default tone position and the change-destination tone position.

According to the above invention, it is found that data is transceived through change-destination tone set/tone position arid a dummy carrier is output through a default tone set/tone position.

Further, the communication method of still another aspect of the present invention is characterized by performing reception through the default tone position when a carrier is detected through only the default tone position.

According to the above invention, communication is performed through a default tone set/tone position also after tone sets/tone positions are changed.

Further, the communication method is characterized in that when a new communication system is connected to the same transmission line, the new communication system transmits a tone-confirmation inquiry command by using the default tone position and thereby, inquires all other communication systems about a tone position used to transceive data, a communication system first responding to the inquiry transmits a tone-confirmation response command by using the default tone position and thereby transmits a tone position used to transceive data, and the new communication system changes tones used to transceive data in accordance with the received tone-confirmation response command.

According to the above invention, also when tone sets/tone positions are changed, a newly-connected communication system uses a default tone set/tone position to inquire about present tone set and tone position. Thereby, the newly-connected communication system can quickly change the default tone set/tone position to the present tone set/tone position used to transceive data.

Further, the communication method is characterized in that, when though a carrier is detected only through a default position, received data at the default position is a dummy carrier, a communication system detecting the carrier transmits a tone-confirmation inquiry command by using the default tone position and thereby, inquires all other communication systems about a tone position used to transceive data, a communication system first responding to the inquiry transmits a tone-confirmation response command by using the default tone position and thereby transmits the tone position used to transceive data, and the communication system detecting the carrier changes tones used to transceive data in accordance with the received tone-confirmation response command.

According to the above invention, also when tone sets/tone positions are changed, a communication system to which an erroneous tone set/tone position is set uses a default tone set/tone position to inquire about a present tone set/tone position. Thereby, the communication system to which the erroneous tone set/tone position is set can quickly change the erroneous tone set/tone position to the present tone set/tone position used to transceive data.

A communication method according to still another aspect of the present invention is characterized in that a plurality of communication systems connected to the same transmission line transceive multitone data constituted of a plurality of predetermined tones at a specific frequency interval by using a multicarrier modulation-demodulation mode, and when a communication system judging that some or all of the tones cannot be decoded or the decoding is difficult serves as a master for changing tones, the master communication system transmits a tone-change request command showing a change-destination tone N (natural number such that $N \geq 2$) times every a certain time, and when receiving a tone-change rejection command from at least one of other communication systems, completes the tone change and master processing at this point of time but when receiving no tone-change rejection command, moves a tone used to transceive data to the change destination, and moreover transmits a tone-change instruction command showing the change-destination tone, and all communication systems other than the master receive the tone-change instruction command and thereafter simultaneously move tones used to transceive data to the change destination.

According to the above invention, a communication system requesting a change of tone sets/tone positions becomes a virtual master among the communication systems connected to the same transmission line to perform communication, the communication system serving as the virtual master transmits a tone-change request command to communication systems other than the virtual master a plurality of times and changes tone sets/tone positions in accordance with reactions of units other than the virtual master. Thereby, it is possible to further securely change tone sets/tone positions in accordance with a state of each communication system.

Further, the communication method is characterized in that, when at least one of the communication systems other than the master transmits a tone-change rejection command before transmitting the tone-change request command up to N times, other communication systems except the master cancel the transmission of tone-change rejection commands of their own.

According to the above invention, it is possible to more quickly change tones because a tone-change rejection command is prevented from being transmitted a plurality of times.

Further, the communication method is characterized in that a default tone set showing an initial-state tone set and a default tone position which is a combination of initial-state tones in the default tone set are previously defined and the communication system performs carrier sense of the default tone position whenever no data is transceived before changing tones and moreover performs carrier sense of a tone position used to transceive data in addition to the carrier sense of the default tone position.

According to the above invention, it is possible to detect whether any data is transmitted in frequency bands of a presently-used tone set/tone position and a default tone set/tone position. In this case, carrier detection is always applied to the default tone set/tone position and while tone sets or tone positions are changed, carrier detection is also applied to a tone frequency presently communicated.

Further, the communication method is characterized in that, when a communication system transmits data after changing the tones, it transmits the data by using the change-destination tone and simultaneously transmits a dummy carrier to the default tone position.

According to the above invention, it is judged whether tone sets or tone positions are changed and when they are changed, a dummy carrier is output to tones constituting a default tone set/tone position. The dummy carrier is necessary when a newly-connected unit performs transmission through a default tone set/tone position when inquiring about a present tone set/tone position.

Further, the communication method is characterized in that, when a carrier is detected through the default tone position and the change-destination tone position, reception is performed through the change-destination tone position.

According to the above invention, it is found that data is transceived through the change-destination tone set/tone position and a dummy carrier is output through the default tone set/tone position.

Further, the communication method is characterized in that reception is performed through the default tone position when a carrier is detected only through the default tone position.

According to the above invention, communication is performed through a default tone set/tone position even after tone sets/tone positions are changed.

Further, the communication method is characterized in that, when a new communication system is connected to the same transmission line, the new communication system transmits a tone-confirmation inquiry command a plurality of times by using the default tone position, thereby inquires all other communication systems about a tone position used to transceive data, and a communication first responding to the inquiry transmits a tone-confirmation response command by using the default tone position and thereby, transmits the tone position used to transceive data, and the new communication system changes tones used to transceive data in accordance with the received tone-confirmation response command.

According to the above invention, a newly-connected communication system uses a default tone set/tone position in order to inquire about a present tone set/tone position. Thereby, the newly-connected communication system can quickly change the default tone set/tone position to the present tone set/tone position.

Further, the communication method is characterized in that, when a carrier is detected only through a default tone position but received data at the default tone position is a dummy carrier, a communication system detecting the carrier transmits a tone-confirmation inquiry command by using the default tone position and inquires all other communication systems about a tone position used to transceive data, and a communication first responding to the inquiry transmits a tone-confirmation response command by using the default tone position and thereby transmits the tone position used to transceive data, and the communication system detecting the carrier changes tones used to transceive data in accordance with the received tone-confirmation response command.

According to the above invention, also when tone sets/tone positions are changed, a communication system to which an erroneous tone set/tone position is set uses a default tone set/tone position in order to inquire about a present tone set/tone position. Thereby, the communication system to which an erroneous tone set/tone position is set can quickly change the default tone set/tone position to the present tone set/tone position used to transceive data.

A communication system according to still another aspect of the present invention is characterized by using the multicarrier modulation-demodulation mode, encoding the same data to n (natural number such that m>n≥2) tones in a specific tone set constituted of m (natural number such that m≥3) tones at a predetermined frequency interval, transmitting encoded multitone data, changing at least one of the n tones to a remaining tone in the tone set when the encoded data cannot be decoded by some or all of the n tones and a tone change instruction is received from reception side, and performing subsequent communication with changed tones.

According to the above invention, tone positions are changed by communication systems of transmission and reception sides and subsequent data transfer is continued through changed tone positions.

Further, the communication system is characterized by changing a tone set to any other tone set when the encoded data cannot be decoded even by using any tone in the tone set and a tone set change instruction is received from reception side and performing subsequent communication through the changed tone set.

According to the above invention, power-line communication stronger in noises is realized because tone sets are changed when secure communication cannot be made even by changing combinations of tone positions in a specific tone set.

A communication system according to still another aspect of the present invention is characterized by using the multicarrier modulation-demodulation mode, receiving multitone data superimposed on n (natural number such that m>n≥2) tones in a specific tone set constituted of m (natural number such that m≥3) tones from transmission side, and instructing the transmission side and other units to change at least one of the n tones when encoded data cannot be decoded by some or all of the n tones.

According to the above invention, when some or the whole of data in a predetermined tone set encoded in accordance with the multicarrier modulation-demodulation mode cannot be decoded, the data is securely decoded at reception side by changing at least one frequency of each tone constituting the predetermined tone set.

Further, the communication system is characterized by judging a change-destination tone set when the encoded data cannot be decoded even by using any tone in the tone set and instructing the transmission side and other units to change tone sets.

According to the above invention, power-line communication stronger in noises is realized because tone sets are changed when secure communication cannot be made even by changing combinations of tone positions in a specific tone set.

A communication system according to still another aspect of the present invention is characterized by using the multicarrier modulation-demodulation mode, encoding the same data to a specific tone set constituted of m (natural number such that m≥3) tones at a predetermined frequency interval and transmitting encoded multitone data.

According to the above invention, tone positions can be changed in accordance with the decision of reception side and moreover, exchange of request and acknowledgment control codes is unnecessary between communication systems. Therefore, it is possible to more quickly change a tone position to a tone position less influenced by noises.

Further, the communication system is characterized by changing the tone set to any other tone set in accordance with a tone-set change instruction when the encoded data cannot be decoded even by using any tone in the tone set and the instruction is received from reception side and performing subsequent communication through a changed tone set.

According to the above invention, power-line communication stronger in noises is realized because tone sets are changed when secure communication cannot be made even by changing combinations of tone positions in a specific tone set.

A communication system according to still another aspect of the present invention is characterized by using the multicarrier modulation-demodulation mode, receiving multitone data superimposed on a specific tone set constituted of m (natural number such that $m \geq 3$) tones from transmission side, decoding encoded data in accordance with n (natural number such that $m > n \geq 2$) tones in the tone set, changing at least one of the n tones to a remaining tone in the tone set when the encoded data cannot be decoded by some or all of the n tones, and then decoding the encoded data again in accordance with changed n tones.

According to the above invention, tone positions can be changed in accordance with the decision of reception side and moreover, request and exchange of acknowledgment control codes is unnecessary between communication system, and thereby it is possible to more quickly change a tone position to a tone position less influenced by noises.

Further, the communication system is characterized by instructing the transmission side to change tone sets when the encoded data cannot be decoded even by using any tone of the tone set.

According to the above invention, power-line communication stronger in noises is realized because tone sets are changed when secure communication cannot be made even by changing combinations of tone positions in a specific tone set.

Further, the communication system is characterized by decoding encoded data in accordance with the m tones when receiving first multitone data, moreover detecting n optimum tones, then decoding the encoded data in accordance with the n detected tones, changing at least one of the n tones when the encoded data cannot be decoded through some or all of the n tones, and decoding the encoded data again in accordance with n changed tones.

According to the above invention, communication can be more quickly performed in a better state because an optimum tone position is detected at the first reception without previously determining a default tone position.

A communication system according to still another aspect of the present invention is characterized by transceiving multitone data constituted of a plurality of predetermined tones at specific frequency intervals in accordance with a multicarrier modulation-demodulation mode, moreover transmitting a tone-change request command showing a change-destination tone when the communication system judges that decoding cannot be made by some or all of the tones or the decoding is difficult and becomes a master for changing tones, completing the tone change and master processing when receiving a tone-change rejection command from at least one of other communication systems within a certain time, moving a tone to be used to transceive data to the change destination when not receiving the tone-change rejection command, and moreover transmitting a tone-change instruction command showing the change-destination tone.

According to the above invention, a communication system requesting a change of tone sets/tone positions becomes a virtual master among communication systems connected to the same transmission line to perform communication, and the virtual-master communication system transmits a tone-change request command to communication systems other than the virtual master and changes tone sets/tone positions in accordance with reactions of the communication systems other than the virtual master. Thereby, it is possible to securely change tone sets/tone positions correspondingly to the state of each communication system.

A communication system according to still another aspect of the present invention is characterized by transceiving multitone data constituted of a plurality of predetermined tones at a specific frequency interval in accordance with a multicarrier modulation-demodulation mode, moreover transmitting a tone-change request command showing a change-destination tone N (natural number such that $N \geq 2$) times every a certain time when the communication system judges that decoding cannot be made by some or all of the tones or the decoding is difficult and becomes a master for changing tones, completing the tone change and master processing when receiving a tone-change rejection command from at least one of other communication systems before the repetition of transmission of the tone-change request command up to N times, moving a tone to be used to transceive data to the change destination when not receiving the tone-change rejection command before the repetition of transmission of the tone-change request command up to N times, and moreover transmitting a tone-change instruction command showing the change-destination tone.

According to the above invention, a communication system requesting a change of tone sets/tone positions becomes a virtual master, and the virtual-master communication system transmits a tone-change request command to communication systems other than the virtual master a plurality of times and changes tone sets/tone positions in accordance with reactions of units other than the virtual master. Thereby, it is possible to more securely change tone sets/tone positions correspondingly to the state of each communication system.

A communication system according to still another aspect of the present invention is characterized by transceiving multitone data constituted of a plurality of predetermined tones at a specific frequency interval in accordance with a multicarrier modulation-demodulation mode and moreover, moving a tone to be used to transceive data to the change destination after receiving a tone-change instruction command showing a change-destination tone when the communication system does not serve as a master for changing tones.

According to the above invention, a communication system serving as a virtual master transmits a tone-change request command to communication systems other than the virtual master and changes tone sets/tone positions correspondingly to reactions of communication systems other than the virtual master.

BRIEF DESCRIPTION OF THE DRAWINGS

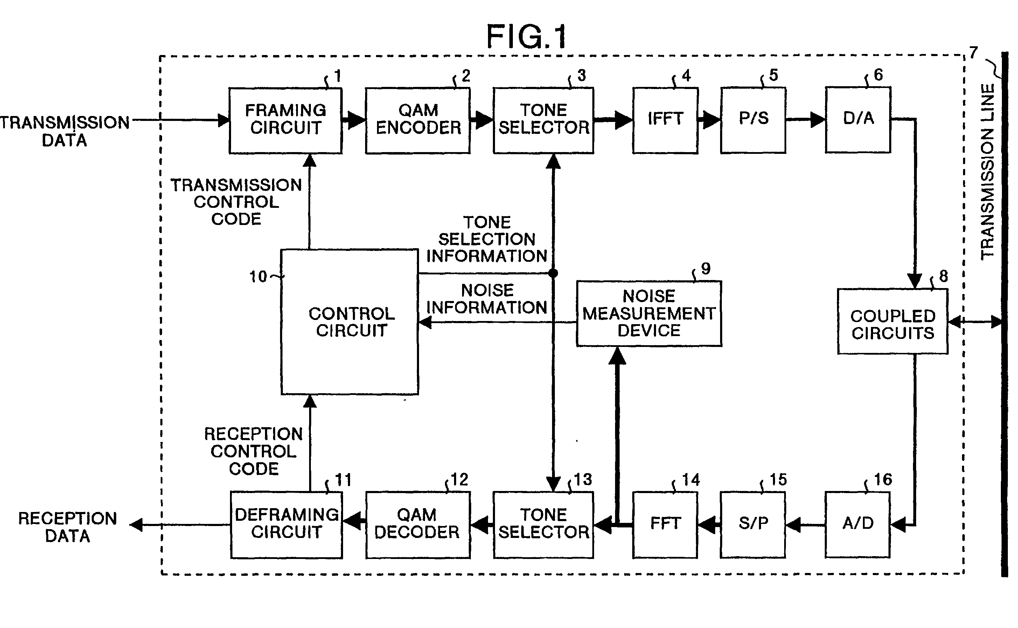

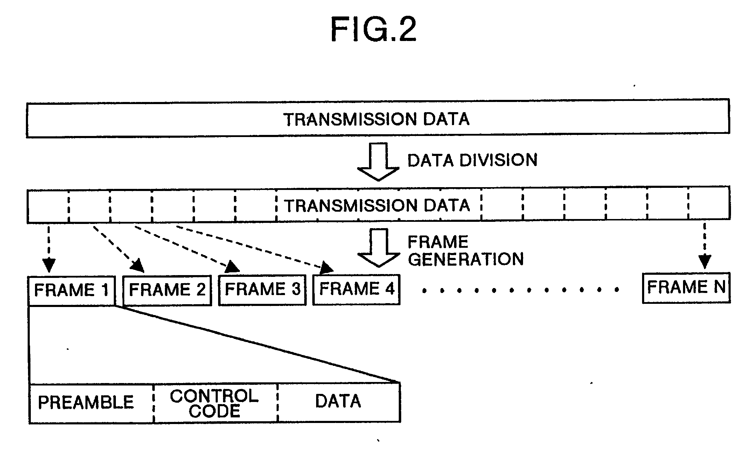

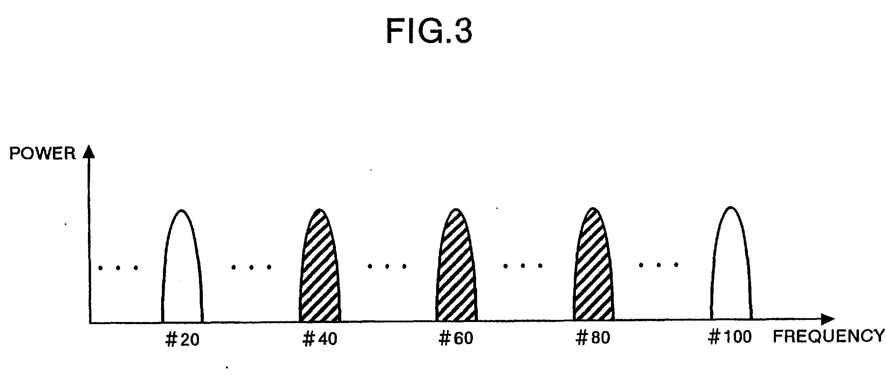

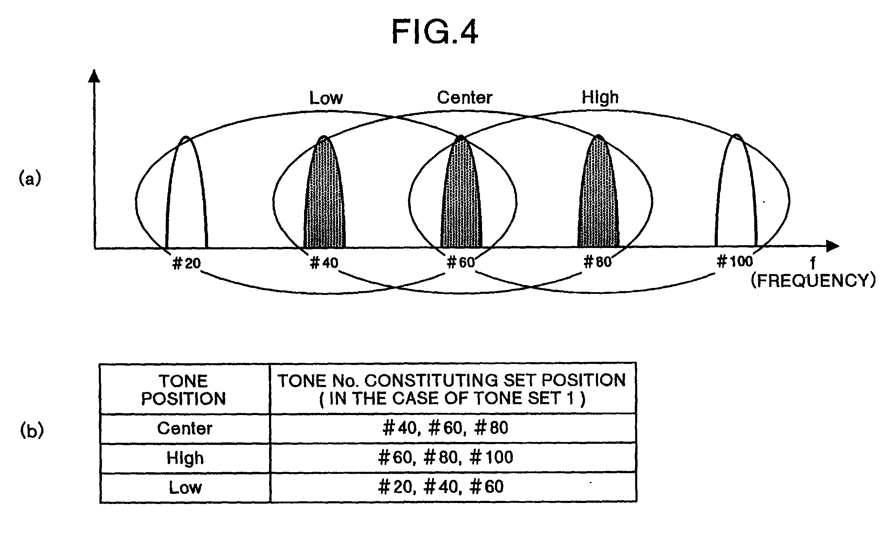

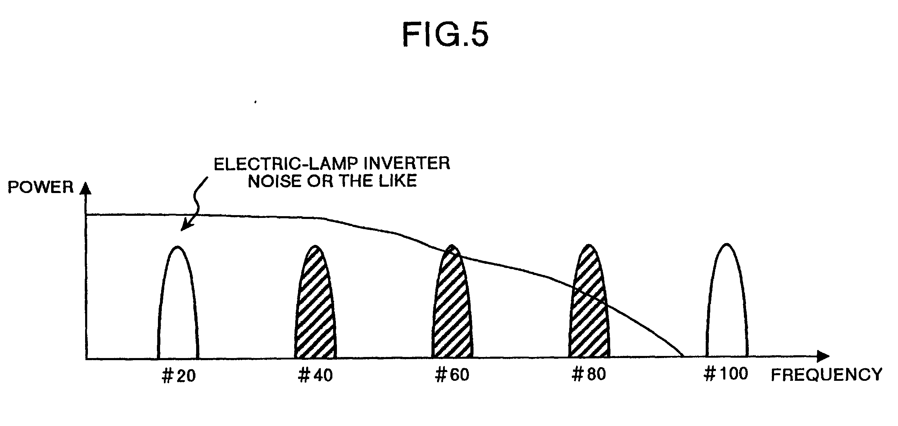

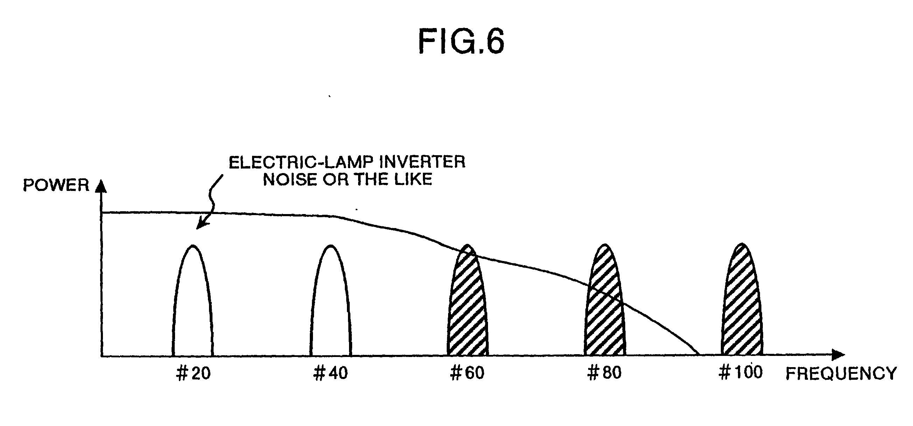

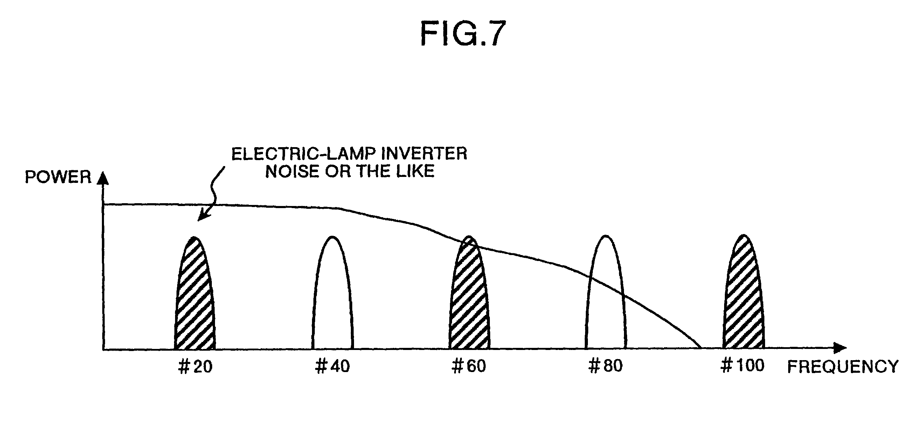

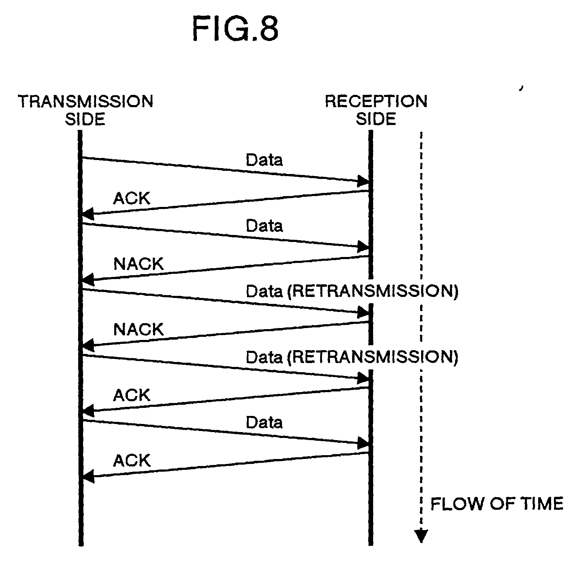

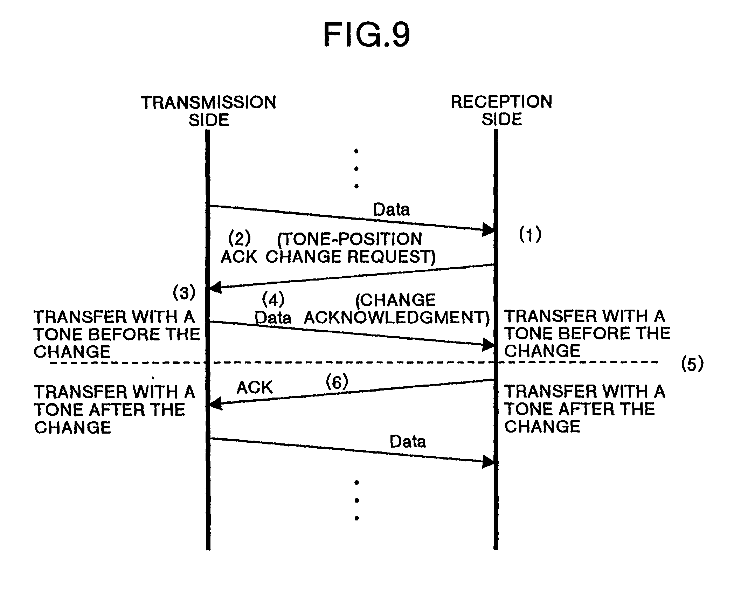

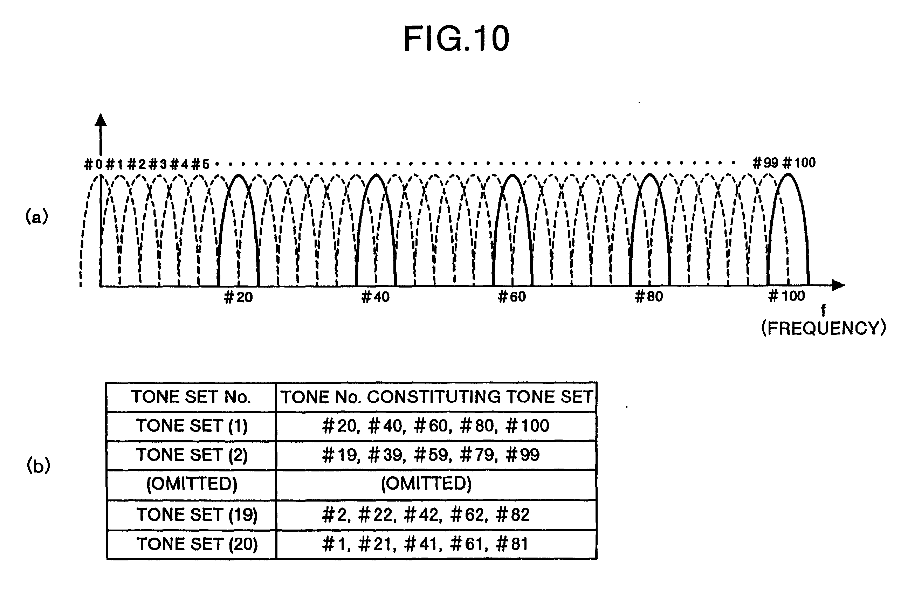

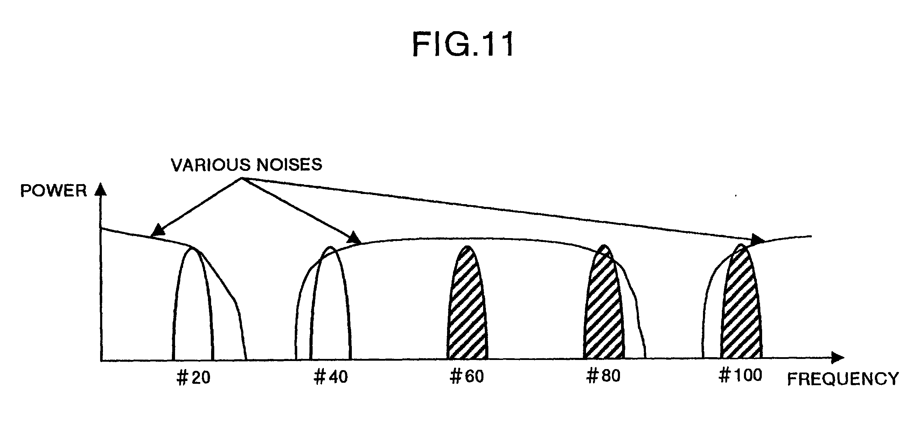

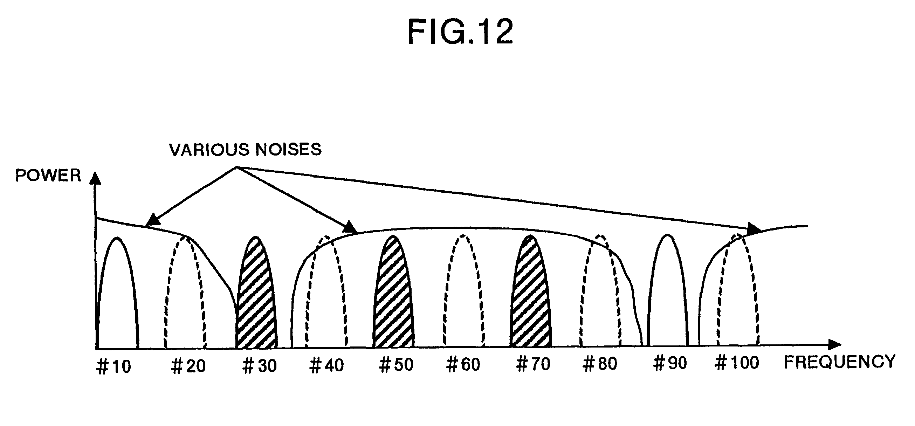

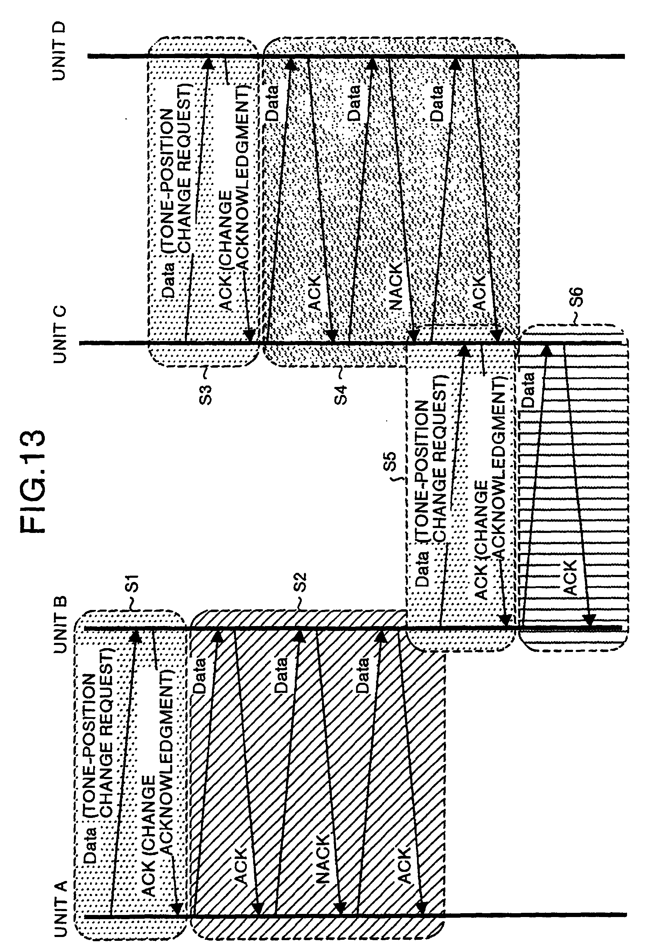

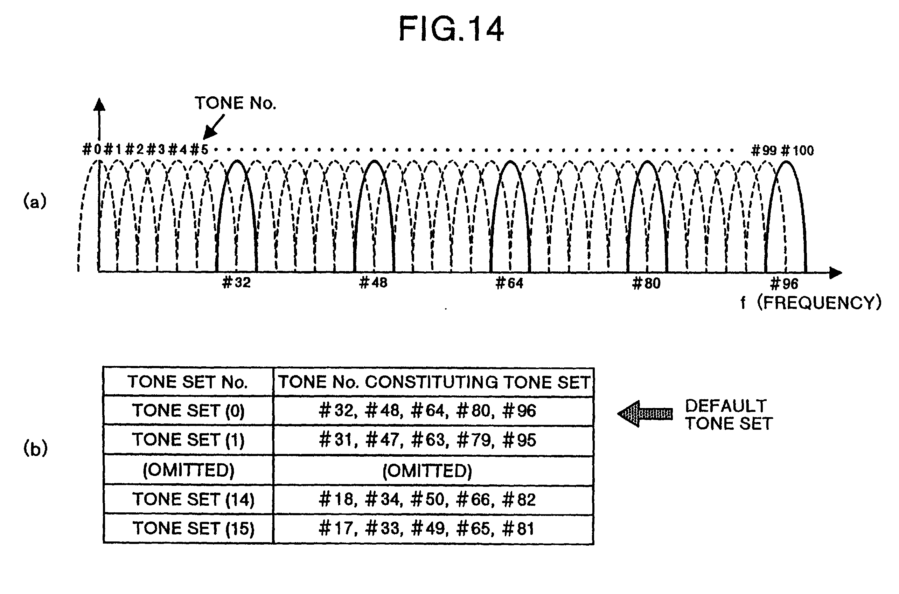

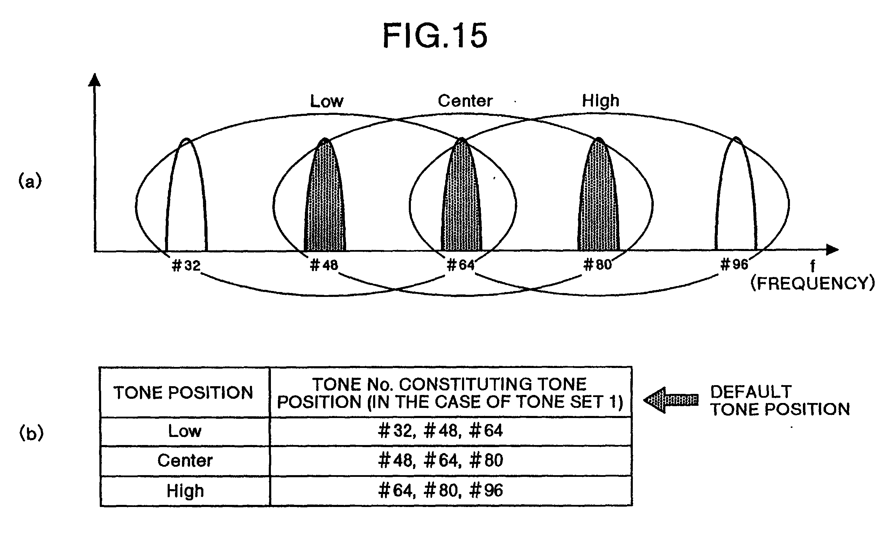

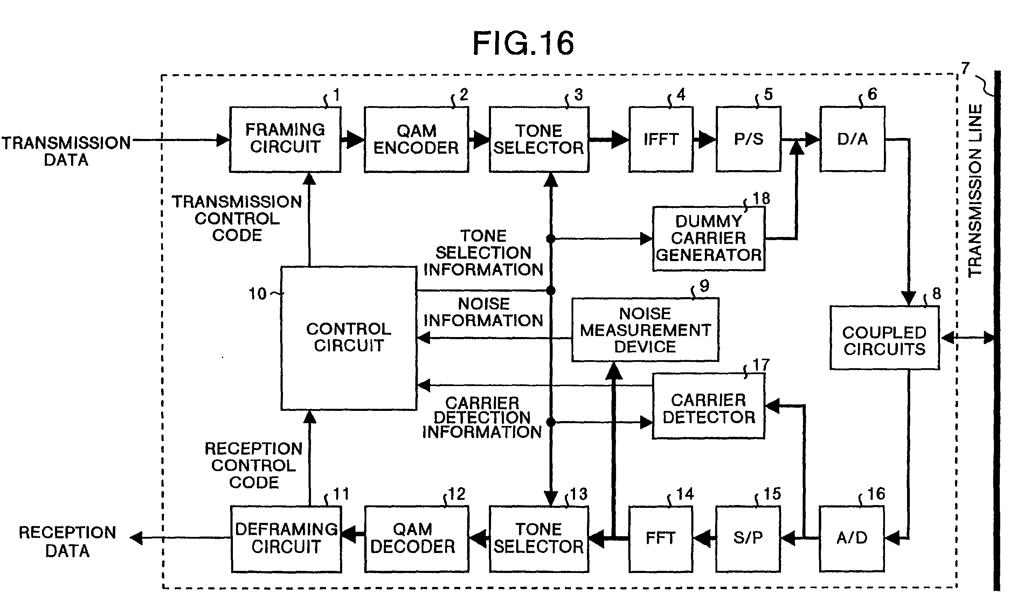

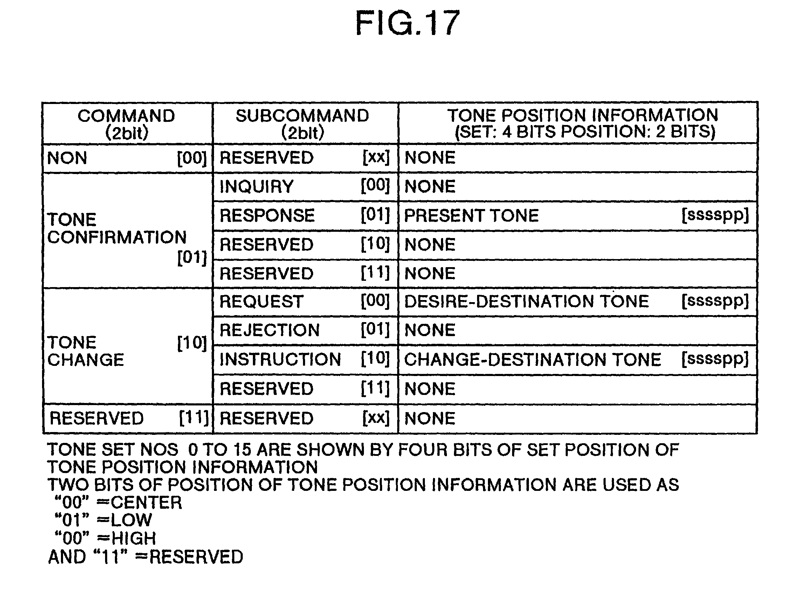

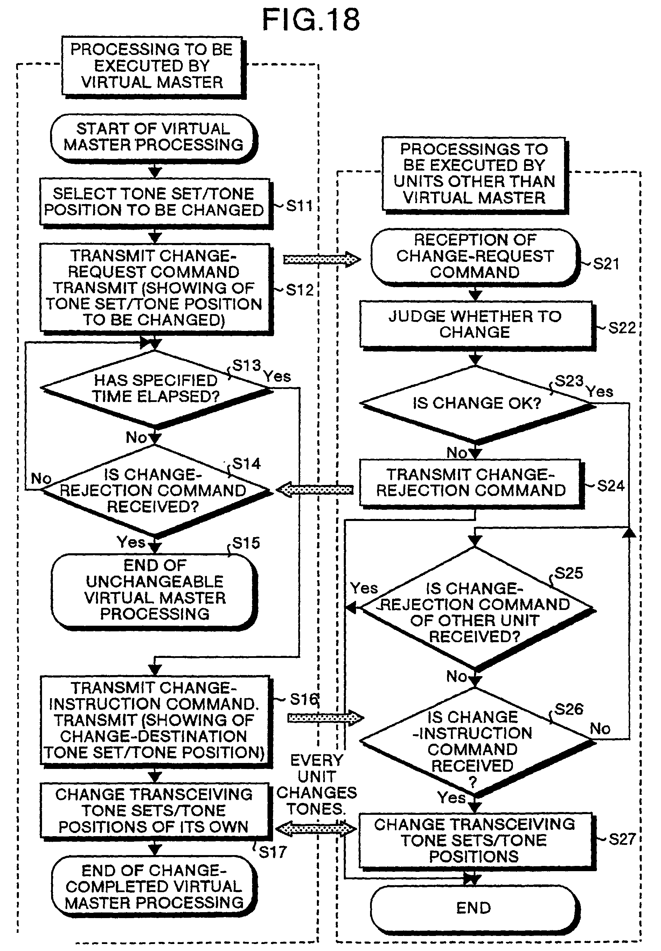

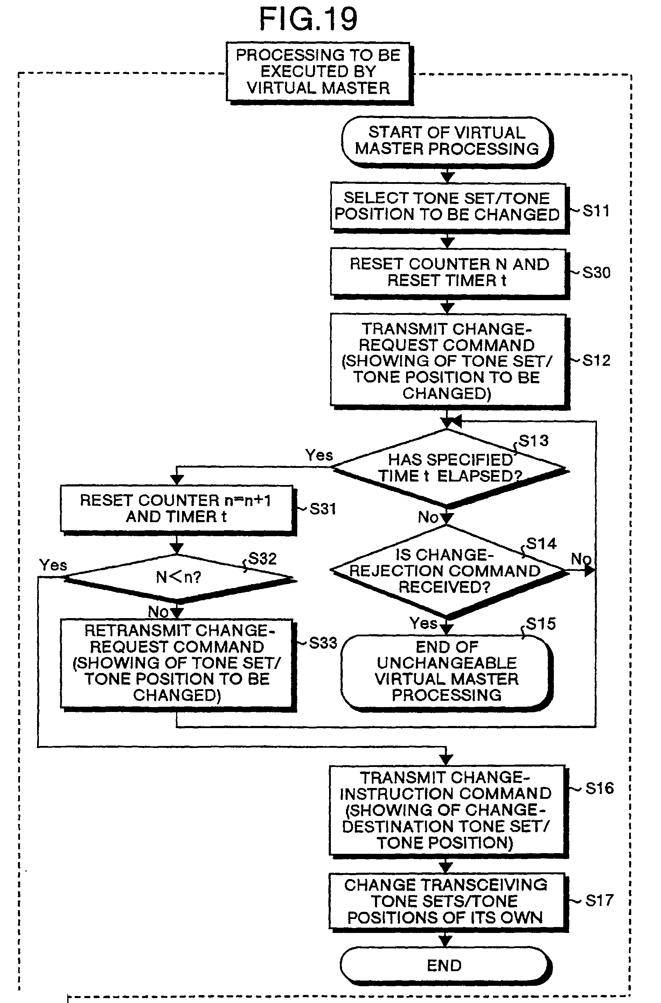

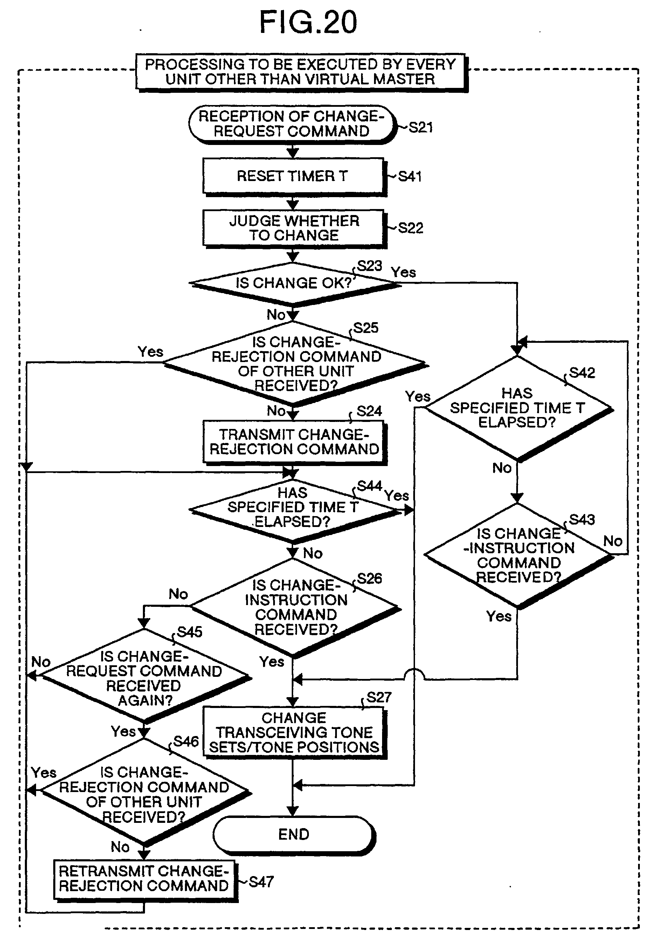

Fig. 1 shows the configuration of a first embodiment of a power-line communication system of the present invention; Fig. 2 shows framing contents; Fig. 3 shows a tone set selected by a tone selector 3; Fig. 4 shows a combination of tone positions prepared by a control circuit 10; Fig. 5 shows a case in which noises are superimposed on a tone position Center at a default; Fig. 6 shows a modification of a tone position when noises are superimposed on a tone position Center at a default; Fig. 7 shows a modification of a tone position when noises are superimposed on a tone position Center at a default; Fig. 8 illustrates a conventional solving method between a transmission-side power-line modem and a reception-side power-line modem when a present tone position reaches a level in which the tone position cannot be normally received due to noises; Fig. 9 illustrates the solving method of the first embodiment between a transmission-side power-line modem and a reception-side power-line modem when a present tone position reaches a level in which the tone position cannot be normally received due to noises; Fig. 10 shows a tone set of a power-line communication modem; Fig. 11 shows a modification of a tone set when noises are superimposed on a tone set at a default; Fig. 12 shows a modification of a tone set when noises are superimposed on a tone set under communication; Fig. 13 shows a communication method for performing N-to-N communication; Fig. 14 shows a tone set of a power-line communication modem; Fig. 15 shows a combination of tone positions prepared by a control circuit 10; Fig. 16 shows the configuration of a seventh embodiment of a power-line communication system (power-line modem) of the present invention; Fig. 17 shows an example of a control command used to change and confirm tone sets/tone positions; Fig. 18 is a flow chart showing processing contents of a virtual-master unit and units other than the virtual master in the seventh embodiment; Fig. 19 is a flow chart showing processing contents of a virtual-master unit in this embodiment; and Fig. 20 is a flow chart showing processing contents of units other than the virtual master in this embodiment.

BEST MODE FOR CARRYING OUT THE INVENTION

The present invention is described below in detail by referring to the accompanying drawings.

First, configuration of a communication system of the present invention is described. Fig. 1 shows the configuration of the first embodiment of a power-line communication system (power-line modem) of the present invention.

In Fig. 1, legend 1 denotes a framing circuit, 2 denotes a QAM encoder, 3 denotes a tone selector, 4 denotes an inverse fast Fourier transform circuit (IFFT), 5 denotes a parallel/serial conversion circuit (P/S), 6 denotes a digital/analog conversion circuit (D/A), 7 denotes a power line, 8 denotes coupled circuits, 9 denotes a noise measurement device, 10 denotes a control circuit for controlling tone sets and tone positions to be described later, 11 denotes a deframing circuit, 12 denotes a QAM decoder, 13 denotes a tone selector, 14 denotes a fast Fourier transform circuit (FFT), 15 denotes a serial/parallel conversion circuit (S/P), and 16 denotes an analog/digital conversion circuit (A/D).

A transmission system of the power-line communication system includes the framing circuit 1, QAM encoder 2, tone selector 3, IFFT 4, P/S 5, and D/A 6. Further, a reception system includes the deframing circuit 11, QAM decoder 12, tone selector 13, FFT 14, S/P 15, and A/D 16.

Moreover, the power-line modem constituted as described above is connected with various units (not shown) for communicating transmission data and reception data and moreover, the power line 7 is connected with a plurality of power-line modems constituted similarly to the above modem. Therefore, the above various units are constituted so as to be able to communicate with a plurality of units through power lines and power-line modems.

Operations of first embodiment of a power-line modem of the present invention are briefly explained below by referring to Fig. 1. First, operations of the transmission system will be explained. For example, when transmission data is input from a unit (not shown) connected to the power-line modem, the framing circuit 1 carries out framing and outputs a frame to the QAM encoder 2. Fig. 2 explains about this framing. As shown in Fig. 2, the framing circuit 1 first divides transmission data into a plurality of bit strings. Then, the framing circuit 1 generates frames to which a preamble to be used for measurement of noises and control codes for acknowledgment and the like for various request commands transmitted from a reception-side power-line modem are added. It is assumed here that frames N in number are generated from the transmission data.

Thereafter, the QAM encoder 2 QAM-codes the frame, moreover encodes the same frame to tones according to the DMT modulation-demodulation mode, and outputs framed signals to the tone selector 3. In this embodiment, the same frame is encoded to five tones in a predetermined tone set to be described later.

The tone selector 3 receives the encoded signals and selects three predetermined tones out of the five tones in accordance with tone selection information sent from the control circuit 10 and outputs the three tones to the IFFT 4. Fig. 3 shows a tone set to be selected by the tone selector 3. This embodiment uses, for example, tone #0 to tone #100, moreover sets five tones (tones #20, #40, #80, and #100) at a predetermined frequency interval (in this case, the interval is assumed as 20 tones for convenience) as the above tone to perform transmission by using three consecutive tones in the tone set. Moreover, at a default, that is, in an initial state, this embodiment always selects and transmits three tones #40, #60, and #80.

The IFFT 4 receives the data superimposed on each tone and converts the frequency-axis data into time-base data by applying inverse fast Fourier transform (IFFT) to the data encoded to the three tones and outputs the converted time-base data to the P/S 5.

Finally, the P/S 5 performs parallel/serial conversion to the parallel data received as time-base data and outputs the serial data to the D/A 6. Moreover, the D/A 6 performs digital/analog conversion to the received serial data and transmits the analog signal to the power line 7 through the coupled circuits 8. As a result, encoded same data is transmitted to three tones at an interval of 20 tones as shown in Fig 3.

Thereby, in this embodiment, even if noises from various units connected to the power line 7 are concentrated on a specific frequency band, data transmission is realized which is stronger in power-line noises than conventional power-line communication by a value equivalent to a frequency interval between tones obtained by encoding the same data.

Operations of the reception system of the above power-line modem are explained below. Because only one power-line modem has been shown in Fig. 1 to be connected to the power line 7 for convenience, operations are described by using the configuration of the illustrated reception system.

For example, the reception system performs operations reverse to those of the above transmission system. That is, the coupled circuits 8 connected to a power line capture multitone data sent from the transmission system and the A/D 16 performs analog/digital conversion to the received analog multitone data. Moreover, the S/P 15 converts the serial data converted into a digital signal into parallel data and then outputs the parallel data to the FFT 14.

The FFT circuit 14 receives the parallel data and executes Fourier transform (FFT). Precisely, the FFT circuit 14 converts multitone data expressed on a time base into data on a frequency axis and outputs the frequency data to the tone selector 13 and noise measurement device 9.

The tone selector 13 receives the frequency data and selects the data for three tones (#40, #60, and #80) designated by the control circuit 10 and outputs the data to the QAM decoder 12. The QAM decoder 12 decodes the same data for three tones from which noises are removed.

Finally, the deframing circuit 11 regenerates reception data by deframing the decoded (QAM-decoded) data and outputs the reception data to a unit (not shown) connected to the power-line modem. This deframing is a processing reverse to the above framing such as a processing of separating a preamble and a control code from a QAM-decoded frame and synthesizing data fields, that is, a processing of reconstituting reception data in the form of original transmission data.

The noise measurement device 9 measures noises of the data for three tones output from the FFT 14 and outputs noise information which is a result of measurement of noises to the control circuit 10.

A noise measuring method utilized by the noise measurement device 9 is explained below. To measure noises, an expected value of presently-received data is normally necessary. In this case, however, it is impossible to normally measure noises because data content in a data field is unknown. Therefore, this embodiment measures noises of each presently-received tone by using a preamble (refer to Fig. 2) which is already known data.

A preamble normally uses predetermined data as information necessary for establishing sync and information showing start of transfer, that is, uses already-known data. Therefore, a reception system can use the already-known data as an expected value for measuring noises. Therefore, in this case, noises of each tone presently used are measured for each frame by using the preamble data. A noise measuring method is not restricted to the above one. For example, it is also permitted to regularly transfer a frame for measuring noises and measure noises by using the frame.

The control circuit 10 judges whether it is necessary to change tone positions of the three tones (#40, #60, and #80) in accordance with noise information measured by the noise measurement device 9. When the circuit 10 judges that it is necessary to change tone positions, it communicates a tone-position-change-request transmission control code to the framing circuit 1 of this modem. In this case, a tone position denotes n (n is a natural number such that m>n≧2)(n is assumed to be equal to 3 in this embodiment for convenience) tones among m (m is a natural number such that m≥3)(m is assumed to be equal to 5 in this embodiment for convenience) tones constituting a certain tone set, which is a combination of frequency bands (tones) for transferring encoded data.

Moreover, the control circuit 10 receives a control code (hereafter referred to as reception control code) transmitted from other party for data communication from the deframing circuit 11 and when receiving a tone-position change request, it judges whether to change tone positions and communicates a change-acknowledgment control code to the framing circuit 1 of this modem. Moreover, when a change of tone positions is determined, the control circuit 10 communicates the tone position to be changed to the tone selectors 3 and 13 of this modem as tone selection information.

Then, a tone-position change method in a power-line modem performing the above operations is described below. Tone positions are first changed in the same tone set by using five default tone sets and three tone positions used at start of transfer as base points. Then, tone sets are changed only when noises cannot be smoothly avoided in every tone position in the same tone set. A change of tone sets is described for an embodiment to be described later.

Fig. 4 shows a combination of tone positions prepared by the control circuit 10. As shown in Fig. 4, the control circuit 10 communicates tone selection information to the tone selector 3 so as to select three tones among five tones (tone set) of #20, #40, #60, #80, and #100. For example, in this embodiment, the combination of tones #40, #60, and #80 used at a default is assumed as a tone position Center, the combination of tones #60, #80, and #100 as a tone position High, and the combination of tones #20, #40, and #60 as a tone position Low, and these tone positions are previously stored and the control circuit 10 communicates tone selection information to the tone selector 3 so as to select any one of the above combinations. To transmit data at a default and newly, this embodiment transmits the data from the tone position Center without fail.

Fig. 5 is an illustration showing a case in which noises are superimposed on the tone position Center at a default. For example, when inverter noises of an electric lamp are superimposed on some of the ton positions (#40, #60, and #80) at a default (refer to Fig. 5), a reception system cannot smoothly decode the tones #40 and #60. In this case, the control circuit 10 judges that the low-frequency side of the tone position Center cannot decode data due to noises in accordance with noise information sent from the noise measurement device 9.

Therefore, the control circuit 10 instructs a change of tone positions by using tone selection information to avoid influences of noises. Fig. 6 is an illustration showing a change of tone positions when noises are superimposed on the tone position Center. For example, when the low-frequency side of the tone position Center is influenced by noises and thereby, it is difficult to decode the data for the tones #40, #60, and #80 at reception side, the circuit 10 first judges that there are wide-band noises at the low-frequency side by considering characteristics of a power line used and instructs a change of tone positions from Center to High (refer to Fig. 6).

Then, when tone positions are changed to tones #60, #80, and #100 and the same data is encoded to each tone but data better than the data before changed cannot be decoded at the reception side, the control circuit 10 further judges that there are wide-band noises at the high-frequency side and instructs a change of tone positions from High to Low.

However, when it is first assumed that there are wide-band noises at the high-frequency side and tone positions are changed from Center to Low and then, it is also permitted to change the tone positions from Low to High unless data cannot be smoothly decoded.

Moreover, when every tone at the tone position Center is influenced by noises and thereby, data cannot be smoothly decoded in some or all of tones of the tone position High, it is also permitted to change from the tone position Center to the tones #20, #60, and #100 as shown in Fig. 7 by simultaneously considering wide-band noises at the lower- and high-frequency sides instead of changing tone positions at two stages by separately considering the wide-band noises at the low- and high-frequency sides. In this case, tone positions can be changed only once.

Moreover, the control circuit 10 may change the tone positions in accordance with noise levels of three tone positions. For example, when data is transferred by using the tone position Center and thereby noises are increased in the tone #40 at the low-frequency side and reception through the tone #40 becomes difficult, the control circuit 10 judges that noises are almost exactly superimposed on the tone #20, generates tone selection information so as to change a tone position to the tone position High, and sends this information to the tone selectors 3 and 13. Moreover, when noises increase in the tone #80 and reception through the tone #80 become difficult, the control circuit 10 judges that noises are also almost exactly superimposed on the tone #100, generates tone selection information so as to change a tone position to the tone position Low, and sends this information to the tone selectors 3 and 13.

When noises increase in the tone #60, it is preferable to decide whether to move to the high-frequency side or low-frequency side by considering characteristics of a power line used as described above and change tone positions in accordance with the decision. In this case, when influences of noises are improved, it is preferable to continuously transfer data under the improved sate. However, when influences of noises increase, it is preferable to change a tone position to another tone position.

Moreover, for judgment whether to change tone positions, a case of changing tone positions when communication becomes difficult through one tone and a case of changing tone positions when communication becomes difficult through two tones are considered. In this case, it is permitted to select either of the cases in accordance with the safety of a system. However, when influences of noises are not improved even after changing to all tone positions in a tone set, it is preferable to change the tone set to another tone set.

Thus, in this embodiment, even when communication becomes difficult through one tone or two tones due to noises, it is possible to dynamically move a tone position to another tone position in a better communication environment while continuing communication through remaining tones by superimposing the same data on every tone used and transmitting data and thus, it is possible to more securely perform data communication.

Exchange of data between a power-line modem at transmission side and a power-line modem at reception side when changing tone positions is explained below while comparing such an exchange performed conventionally. As described above, in the case of this embodiment, it is assumed that selectable tone sets and tone positions are previously determined and all combinations of the tone sets and tone positions are shared by transmission side and reception side. Moreover, a tone position in a tone set probably steadily free from noises is determined as a default for each power line to be used to start communication with a default tone position without fail.

When there is no influence of noises at a default tone position, data values divided into a plurality of frames are normally successively transferred through the same tone position. In this case, reception side not only receives frames but also transfers a predetermined number of frames to the transmission side by superimposing ACK showing that data is normally received or NACK showing that data is not normally received on a data field in a frame whenever receiving the predetermined number of frames in order to communicate a reception state to the transmission side. For example, when a present tone position reaches a level at which the tone position cannot be smoothly received due to noises, NACK is returned to the transmission side.

Fig. 8 is an illustration showing a conventional solving method between a transmission-side power-line modem and a reception-side power-line modem when a present tone position reaches a level at which the tone position cannot be normally received due to noises. Thus, when a present tone reaches a level at which the tone cannot be normally received due to noises in the prior art, the reception-side power-line modem returns NACK to the transmission-side power-line modem. In this case, the next transmission data from the transmission side is the retransmission data of the last time and the transmission-side power-line modem transmits the same data a plurality of times until ACK is returned.

Fig. 9 is an illustration showing a solving method of this embodiment between a transmission-side power-line modem and a reception-side power-line modem when a present tone position reaches a level at which the tone position cannot be normally received due to noises. Thus, in the case of this embodiment, the noise measurement device 9 measures noises of each tone presently used and the control circuit 10 changes tone positions in accordance with any one of the above methods when judging that communication becomes difficult due to noises in accordance with tone position selection information sent from the noise measurement device 9.

A change of tone positions is described below by referring to Fig. 9. However, because data is bidirectionally transferred between transmission side and reception side, a tone-position change request may be generated at the transmission side or the reception side. However, it is assumed here that a request is generated at the reception side.

For example, a reception-side power-line modem receives data through a tone position at a default. When the control circuit 10 judges that communication becomes difficult through a tone position at a default in accordance with noise information sent from the noise measurement device 9, the circuit 10 determines a tone position to be changed and communicates that the tone position is to be changed to the framing circuit 1 in accordance with a transmission control code. The framing circuit 1 inserts a tone-position-change-request control code into a control code field (refer to Fig. 2) in the frame (this insertion corresponds to the processing shown by (1) in Fig. 9) when transmitting ACK or NACK data.

Moreover, a reception-side power-line modem transmits transfer data (frame) in which a tone-position change request is included as a control code to the transmission-side power-line modem (this transmission corresponds to the processing shown by (2) in Fig. 9).

In the transmission-side power-line modem receiving the frame from the reception-side power-line modem, the deframing circuit 11 separates a control code in the control code field in the frame from the received frame and sends this control code to the control circuit 10. The control circuit 10 selects a tone position prepared as a change destination as previously described and communicates a change-acknowledgment control code to the framing circuit 1. The framing circuit 1 receiving the change-acknowledgment control code inserts the change-acknowledgment control code into the control code field of a transmission frame (this insertion corresponds to the processing shown by (3) in Fig. 9) when transmitting the next data.

Thereafter, the transmission-side power-line modem transmits a frame in which a change acknowledgment is included as a control code to the reception-side power-line modem (this transmission corresponds to the processing shown by (4) in FIG 9). At the time of the transmission, the tone positions are not changed and therefore, the transmission is performed through a tone position at a default. Moreover, after the transmission, because the control circuit 10 performs subsequent transmission and reception through a requested tone position, it communicates a change-destination tone position to the tone selectors 3 and 13.

In the reception-side modem receiving the frame, the deframing circuit 11 separates a control code from a control-code field in a frame and communicates the control code to the control circuit 10. The control circuit 10 confirms that a change of tone positions is acknowledged by the transmission-side power-line modem in accordance with the control code and moreover, communicates a change-destination tone position to the tone selectors 3 and 23 (this communication corresponds to the processing shown by (5) in Fig. 9) in order to perform subsequent transmission and reception through a requested tone position.

The reception-side power-line modem then selects a tone position previously set as a change destination and transmits ACK or NACK data through the selected tone position (this transmission corresponds to the processing shown by (6) in Fig. 9). Moreover, in this case, because tone positions are already changed in the transmission-side power-line modem, the modem can receive a frame transmitted from the reception-side power-line modem.

Thus, in the case of this embodiment, tone positions are changed by the transmission- and reception-side power-line modems and subsequent data transfer is continued through a changed tone position. That is, in the case of this embodiment, when some or the whole data in a predetermined tone set encoded in accordance with a DMT modulation-demodulation mode cannot be decoded, it is possible to securely decode data at reception side by changing at least one frequency of tones constituting the predetermined tone set.

Moreover, in the case of this embodiment, two tones are always common with a tone at a default even when changing tone positions and it is possible to perform communication by using the two tones even while changing tone settings. Therefore, it is possible to change tone sets without interrupting the communication.

In the case of this embodiment, a tone set is constituted of five tones. However, it is also permitted to constitute a tone set of three or four tones. Moreover, it is permitted to constitute a tone set of six tones or more. Furthermore, interval between tones constituting a tone set is not restricted to 20 tones. For example, it is permitted to constitute a tone set of four tones at an interval of 10 tones, specify two middle tones as tone positions at a default, and change the tone positions to two high-frequency or low-frequency tone positions when noises are superimposed on the tone positions.

Furthermore, in the case of this embodiment, a tone position is selected after encoding, that is, the QAM encoder 2 encodes the same data to five tones constituting a tone set and the tone selector 3 selects a tone position out of five tones constituting the encoded tone set. However, it is also permitted to select a tone position before encoding and encode the same data only to the selected tone position. In this case, the tone selector 3 is set to the front stage of the QAM encoder 2 or functions same as those of the tone selector 3 are provided for the QAM encoder 2 to encode the same data only to a selected tone position.

Moreover, in the case of this embodiment, three tones used are changed when decoding cannot be accurately made through a tone position at a default. However, it is also permitted to directly use the three tones at a default and add another tone. Specifically, when tone positions at a default are tones #40, #60, and #80, the following tones are used: #20, #40, #60, and #80; #40, #60, #80, and #100; or #20, #40, #60, #80, and #100.

Features of a second embodiment of a power-line modem of the present invention are described below. In the case of the first embodiment, three tones are selected out of a tone set constituted of five tones and transmitted by superimposing data on the three tones. In the case of this embodiment, a transmission-side power-line modem encodes the same data to all tones of a tone set and transmits the five tones while superimposing data on the tones. In the configurations of this embodiment, the same configuration as that of the first embodiment previously described is provided with the same legends and its description is omitted. Specifically, hardware configuration of the power-line modem of this embodiment is the same as that of the first embodiment except that functions of a control circuit 10 are different.

For example, when a transmission-side power-line modem encodes the same data to all tones in a predetermined tone set and transmits data while superimposing the data on five tones, a reception-side modem decodes only a tone position Center (refer to Fig. 4), changes the tone position to Low or High in accordance with a decision of the control circuit 10 when a reception state through the tone position is deteriorated, and performs decoding through the changed tone position.

Thus, in the case of this embodiment, tone positions can be changed in accordance with a decision of reception side and exchange of request and acknowledgment control codes is unnecessary between power-line modems. Therefore, it is possible to more quickly change a tone position to a tone position less influenced by noises compared to the case of the first embodiment.

A third embodiment of a power-line modem of the present invention is described below. In the case of the third embodiment, a transmission-side power-line modem always encodes the same data to all tones in a tone set and then, transmits encoded data, and moreover a reception-side power-line modem receives the data on all tones only when receiving a first frame and thereafter performs transmission by using an optimum tone position detected inside. A configuration of this embodiment same as those of the first and second embodiments is provided with the same symbol and its description is omitted. Specifically, hardware configuration of the power-line modem of this embodiment is the same as that of the first embodiment except that functions of a control circuit 10 are different.

Moreover, when a reception state of a tone position presently used is deteriorated due to noises, the reception-side power-line modem changes tone positions so as to avoid noises similarly to the case of the first or second embodiment, or detects an optimum tone position again by using all tones and thereafter continues decoding by selecting a detected optimum tone.

Thus, in the case of this embodiment, because an optimum tone position is detected through first reception without previously determining a default tone position, it is possible to quickly perform communication under a better condition compared to cases of the first and second embodiments.

Features of a fourth embodiment of a power-line modem of the present invention are described below. In the case of this embodiment, a function for changing tone sets is further added to the control circuit 10 of the above first embodiment. A configuration of this embodiment same as that of the first, second, or third embodiment is provided with the same symbol and its description is omitted.

Fig. 10 is an illustration showing a tone set of a power-line modem. For example, when the QAM encoder 2 generates multitones of tones #1 to #100 (100 tones), a tone set (1) is constituted of tones #20, #40, #60, #80, and #100 similarly to the case of the above-described first embodiment and a tone set (2) is constituted of tones #19, #39, #59, and #99. Thereafter, tone numbers are decreased in order of tone sets. Thus, a tone set (19) is constituted of tones #2, #22, #42, #62, and #82 and a tone set (20) is constituted of tones #1, #21, #41, #61, and #81 so that tones constituting each tone set do not duplicate.

Operations of this embodiment are explained below. In the case of this embodiment, the tone set (1) constituted of tones #20, #40, #60, #80, and #100 out of tones #1 to #100 is used as a tone set at a default, tones #40, #60, and #80 are used as tone positions at a default, and tones #20 and #100 are used when tone positions are changed.

For example, when communication is difficult due to noises, a power-line modem changes tone positions in the same manner as the case of the first embodiment by using the tone set (1) constituted of tones #20, #40, #60, #80, and #100. As a result, when data for the tone set (1) cannot be decoded by a reception-side power-line modem because noises are superimposed on the tones #20, #40, #60, #80, and #100 as shown in Fig. 11, a power-line modem of this embodiment instructs the control circuit 10 to change tone sets.

Fig. 12 is an illustration showing an example of changing tone sets when noise are superimposed on a tone set presently communicated. That is, in the case of this embodiment, when the control circuit 10 judges that communication is difficult even if changing tone positions in the tone set (1), it changes a tone to any tone position of a tone set (10) constituted of tones #10, #30, #50, #70, and #90 whose frequencies are slightly separate from that of the tone set (1) by considering a range to be influenced by noises. The power-line modem in which a tone set is changed to the tone set (10) first selects middle tones #30, #50, and #70 in the tone set (10).

Thereby, in the case of this embodiment, data can be decoded by a reception-side power-line modem and preferable communication is realized because the tone #30 is not influenced by noised even when, for example, a default tone set is influenced by noises, moreover a tone position including the changed tones #50 and #70 is influenced by noises, and data cannot be securely decoded.

Moreover, when encoded data cannot be decoded even by the middle tones #30, #50, and #70 of the tone set (10), tones are changed to the tones #50, #70, and #90, tones #10, #30, and #50, or tones #10, #50, and #90 in the same manner as in the cases of the first to third embodiments. Furthermore, if the encoded data cannot be still changed, tones are further changed to other tones.

Thus, in the case of this embodiment, same advantages as the case of the first embodiment are obtained, and in addition, power-line communication strong in noises compared to the case of the first embodiment is realized because tone sets are changed when secure communication cannot be made even after changing combinations of tone positions in a specific tone set.

In Fig. 10, it is assumed that a power-line modem prepares tones of (1) to (20). However, it is enough that a plurality of changeable tone sets are prepared.

Features of a fifth embodiment of a power-line modem of the present invention are described below. In the case of the first to fourth embodiments, in order to change the tone positions, or request or acknowledge the change of tone sets, control codes are exchanged between power-line modems under communication. In the case of fifth embodiment, a tone-set-change-request control code is transmitted to all power-line modems connected to the same power line in order to change tone sets. A configuration of this embodiment same as those of the first to fourth embodiments previously described is provided with the same symbol and its description is omitted.

That is, in the case of this embodiment, when a reception-side power-line modem judges that communication is difficult, it generates a tone-position change request or tone-set change request and transmits the generated change request to a transmission-side power-line modem serving as a communication counterpart and moreover, all power-line modems connected to the same power line 7.

In this case, a reception-side power-line modem receives an acknowledgment for change to a tone position or a tone set least influenced by noises from all power-line modems connected to the same power line 7 other than the reception-side power-line modem. In this case, the reception-side power-line modem receives change acknowledgments in accordance with a predetermined sequence so that data does not collide with each other.

Moreover, the reception-side power-line modem determines moving-destination tone position and tone set control circuit 10 uses the change acknowledgment from each power-line modem, for example, in accordance with majority rule and then, communicates the moving destination to all power-line modems again.

Thus, in the case of this embodiment, same advantages as those of the first to fourth embodiments are obtained and moreover, because all power-line modems simultaneously move tone sets, preferable communication is realized not only between power-line modems under communication but also with other power-line modem with which communication may be thereafter realized.

A sixth embodiment of a power-line modem of the present invention is described below. In the case of the first to fifth embodiments, it is difficult for two sets of units or more to communicate each other at the same time because at least one tone (e.g. a central tone in a tone set) always duplicate when transferring data in one tone set.

Therefore, in the case of sixth embodiment, when many communication units (units respectively provided with a power-line modem) are present on the same power line 7, default tone set and tone position are used as tones dedicated to negotiation between power-lime modems to be newly transferred in order to realize N-to-N communication. Moreover, a power-line modem for transferring data perform subsequent data communication through a tone set other than a default tone set by scanning a tone set not presently used for transfer by other power-line modem and changing the tone set to another tone set other than the default tone set. Thereby, this embodiment allows a plurality of power-line modems to communicate each other at the same time. A configuration of this embodiment same as those of the first to fifth embodiments is provided with the same symbol and its description is omitted.

Operations of this embodiment are described by referring to the accompanying drawings. In this case, it is assumed that four units A to D are connected to the same power line 7 through a power-line modem for convenience of explanation. Fig. 13 is an illustration showing a communication method for performing N-to-N communication. For example, to perform communication between unit A and unit B, the units A and B perform first transfer by using a default tone set (1) and during the above period, they perform agreement about movement of a tone set (step S1). Then, for subsequent communication, they perform mutual communication by using a tone set such as a tone set (19) other than the default tone set (1) (step S2).

Then, when it is necessary to perform communication between unit C and unit D, the units C and D first confirm that other unit does not perform communication through the default tone set (1) and then, perform first transfer by using the default tone set (1) and during the above period, they perform agreement about movement of a tone set similarly to the above described (step S3). Then, they perform mutual communication by using a tone set other than the tone set (19) such as a tone set (10) (step S4).

Then, when it is necessary to perform communication between the units B and C, the units B and C first confirm that other unit does not perform communication through the default tone set (1) and then perform first transfer by using the default tone set (1), and during the above period, perform agreement about movement of a tone set (step S5). Thereafter, they perform mutual communication by using, for example, a tone set (3) other than the tone set (19) used between the units A and B and the tone set (10) used between the units C and D (step S6).

Thus, in the case of this embodiment, a tone set used for communication between the units does not depend on a combination of units or frequency bands used for communication do not duplicate. Therefore, even when different unit combinations simultaneously transmit data to the power line 7, N-to-N simultaneous communication is realized because data values do not interfere each other. Thereby, power-line utilization efficiency is improved.

Moreover, this embodiment uses tone sets used between units as tone sets having frequencies different from each other than the tone set (1) dedicated to negotiation. Thus, because it is possible to avoid a tone set communicated between other units and a tone set which cannot be used due to noises, N-to-N simultaneous communication is realized without adding extra functions by configuration of this embodiment same as those of the first to fifth embodiments above described.

Furthermore, this embodiment makes it possible to change tone positions in a presently-used tone set and change tone sets even when units requiring data transfer perform transfer each other through tone sets different from each other. In this case, the same processing as the cases of the first and second embodiments is performed. Particularly, to change tone sets, it is possible to securely execute N-to-N simultaneous communication without adding extra functions by preparing tone sets so that they do not duplicate each other.

Furthermore, in the case of this embodiment, tone sets used between units use not-duplicated tone sets other than the default tone set (1). However, it is also permitted for tone sets to duplicate each other. In this case, it is necessary for a unit generating a transmission request to have a function for scanning a tone set used on the power line 7 or as other method, it is necessary to use an arbitration unit (not shown) for scanning all usable frequency bands and controlling a frequency band having noises and a tone set presently used by other unit. In the case of the latter, the unit generating the transmission request uses the default tone set (1) before start of transfer and transmits a transfer request to the arbitration unit, and the arbitration unit designates a tone set not be duplicated to each unit. Thus, when each unit performs transfer by using a designated tone set, it is possible to reduce the time for individually scanning a usable tone set and the cost for realizing the function.

Features of a seventh embodiment of a power-line modem of the present invention are described below. In the case of this embodiment, a procedure for a plurality of units connected to a transmission line (power line) to simultaneously change tone positions is described in detail in order to more securely realize the communication method described for the fifth embodiment. Moreover, a problem is solved that after tone sets and tone positions are once changed, a newly-connected unit cannot perform communication because there is no means for detecting a moving-destination tone position. That is, it is made possible that the newly-connected unit can securely follow a tone change even after tones are changed.

The following are features of embodiments from this embodiment downward.

(1) A virtual master is introduced which serves as an arbitrator for a tone change procedure.
(2) Carrier sense is applied to a default tone and a moving-destination tone so that default data and moving-destination data can be received in accordance with a carrier-sensing result.
(3) A dummy carrier is transmitted to a default when performing transmission even after movement.
(4) A newly-connected unit inquires about a present tone position by first using a default.

Fig. 14 shows a tone set of a power-line communication modem of seventh embodiment. Concepts of a tone set and a tone position are the same as cases of the first to sixth embodiments. In the case of this embodiment, however, a combination of tones constituting a tone set is different from that in Fig. 10. That is, in Fig. 14, 101 tones (tone #0 to tone #100) at an interval of 4.3125 kHz are assumed to define 16 tone sets by forming a group of five tones selected at an interval of 16 tones as a tone set and using tones from #17 up to #96. Moreover, a default tone set is a tone set (0) constituted of a combination of tones #32, #48, #64, #80, and #96 as shown.

Fig. 15 shows a combination of tone positions prepared by the control circuit 10 in the seventh embodiment. In Fig. 15, because the tone set shown in Fig. 14 is used, tone positions constituted of tones different from those in Fig. 4 are used. That is, in the same manner as in the cases of the first to sixth embodiments, a combination of three low-frequency-side tones is defined as a tone position Low, a combination of three middle tones is defined as a tone position Center, and a combination of three high-frequency-side tones is defined as a tone position High and moreover, a default tone position is defined as Center for all tone sets. Moreover, data is transferred by selecting specific tone set and tone position and using three selected tones.

Fig. 15 shows tone positions of a tone set (0) that is a default tone set and the default tone position Center is constituted of three middle tones #48, #64, and #80.

Fig. 16 is an illustration showing a configuration of the seventh embodiment of a power-line communication system (power-line modem) of the present invention. In Fig. 16, legend 17 denotes a carrier detector and 18 denotes a dummy carrier generator. Moreover, a configuration of this embodiment same as those of the first to sixth embodiments is provided with the same legends and their description is omitted. This embodiment is different from the first to sixth embodiments in that the carrier detector 17 and dummy carrier generator 18 are newly added and a function for controlling new tone set/tone position to be described later is added to a control circuit 10.

The carrier detector 17 has a function for detecting whether any data is transmitted in frequency bands of a presently-used tone set/tone position and a default tone set/tone position. The carrier detector 17 always performs carrier detection of the default tone set/tone position, moreover performs carrier detection for a tone frequency presently communicated in accordance with tone selection information sent from the control circuit 10 when tone sets or tone positions are changed, and outputs detected-carrier information to the control circuit 10.

Moreover, the dummy carrier generator 18 has a function for generating a dummy carrier to be output to a tone of a default tone set/tone position when tone sets/tone positions are changed. The dummy carrier generator 18 judges whether tone sets or tone positions are changed in accordance with tone selection information sent from the control circuit 10. When tone sets or tone positions are changed, the generator 18 outputs a dummy carrier to a tone constituting the default tone set/tone position. As a dummy carrier, it is considered to use a sine wave having a frequency equal to that of each tone constituting the default tone set/tone position.

In addition to the functions of the first to sixth embodiments, the control circuit 10 judges that a dummy carrier is transmitted to a default tone when a carrier is simultaneously detected in a moving-destination tone and a default tone and communicates tone selection information to tone selectors 3 and 13 so as to receive the moving-destination tone. However, when no carrier is detected in the moving-destination tone but a carrier is detected only in the default tone, the circuit 10 communicates tone selection information to the tone selectors 3 and 13 so as to receive the data for the default tone.

Moreover, this embodiment changes tone sets/tone positions by using a control command. Fig. 17 is an illustration showing a control command used to change and confirm tone sets/tone positions. The control command is added to or separated/extracted from each transmission frame through the framing and deframing shown in Fig. 2 and constituted of, for example, two-bit command and subcommand and six-bit (four bits for tone set and 2 bits for tone position) tone-position information.

Specifically, a tone change command of command [10] is used to change tone sets/tone positions of an existing unit to be described later. Therefore, precisely there are a tone-change request command [1000], a tone-change rejection command [1001], and a tone-change instruction command [1010]. A desire-destination tone is added to the tone-change request command [1000] as six-bit tone-position information and a change-destination tone is added to the tone-change instruction command [1010] as six-bit tone-position information.

Moreover, a tone confirmation command of a command [01] is sued to change units newly connected to a transmission line to be described later. Therefore, precisely there are a tone-confirmation inquiry command [0100] and a tone-confirmation response command [0101]. A presently-used tone is added to the tone-confirmation response command [0101] as tone position information.

Tone change operations of this embodiment are described below. As explained with respect to Fig. 14 and Fig. 15, combinations of tone sets and tone positions are previously determined and transmission- and reception-side power-line modems have the combinations. Moreover, for a power line 7 used, a tone position of a tone set probably steadily having less noises is determined as a default tone set/tone position so as to start communication with the default tone set/tone position without fail.

First, a carrier sense method for a power-line communication system (hereafter referred to as unit) is described below. In this case, it is referred to as carrier sense to check whether other unit transmits any data on the power line 7. For example, in the case of this embodiment, every unit performs carrier sense by using the carrier detector 17 (refer to Fig. 16) whenever transmission or reception is not performed and, when a carrier is detected, transmits detected-carrier information to the control circuit 10 and immediately changes to a reception state, and to perform transmission, changes to a transmission state after confirming that no carrier is present on the power line 7.

In this case, when tone sets or tone positions are not changed but communication is performed through a default tone set/tone position, each unit does not have to perform any special processing. However, when tones are changed, data is transmitted to a unit for performing transmission by using a change-destination tone set/tone position under control by the control circuit 10 and moreover tone-position selection information and a control signal are transmitted to the unit to make the dummy carrier generator 18 generate a dummy carrier and output the dummy carrier to a default tone set/tone position. This is necessary to confirm that power is turned on after tone sets/tone positions are changed but a newly-connected unit does not perform communication through other tone set/tone position. Therefore, the newly-connected unit confirms that no dummy carrier is transmitted to a default tone set/tone position and then, inquires about a present tone set/tone position by using the default tone set/tone position. The newly-connected unit confirms that other unit does not perform transmission through a change-destination tone set/tone position and then starts transmission.

Carrier sense that is a processing of the carrier detector 17 is performed by measuring the signal power of a purposed tone. Carrier-sense objects include three tones of a default tone set/tone position and change-destination tones presently changed. Particularly, when tones are changed, a tone to be carrier-sensed is determined as described below depending on a tone change state.

First, when neither tone positions nor tone sets are changed, carrier sense is applied to only three tones (#48, #64, and #80) of a default tone set/tone position. Then, when only tone positions are changed, carrier sense is applied to four tones including three tones of the default tone set/tone position and one more tone (#32 or #96) used for a change-destination tone position. Finally, when tone sets are changed, carrier sense is applied to six tones including three tones of the default tone set/tone position and three tones of the change-destination tone set/tone position because tone positions are also changed.

When tone sets or tone positions are changed as described in the above Items (2) and (3), reception is started when a carrier is detected by any tone. In this case, a tone set/tone position to be received is determined in accordance with the following two ways depending on the position of the detected carrier.

For example, when a carrier is detected through a default tone set/tone position and a change-destination tone set/tone position, reception is performed through the change-destination tone set/tone position. In this case, transmission and reception are performed through the change-destination tone set/tone position and the above dummy carrier is output to the default tone set/tone position. However, when a carrier is detected only through the default tone set/tone position, reception is performed through the default tone set/tone position. That is, the reception is performed when communication is started through the default tone set/tone position also after tone sets/tone positions are changed.

A specific example is a case in which a newly-connected turned-on unit inquires about a present tone set/tone position after tone sets/tone positions are changed. In this case, the newly-connected unit transmits data through a default tone set/tone position and other units receive the data of the newly-connected unit through the default tone set/tone position. Another specific example is a case in which, though a carrier is detected only through default tone set & tone position, data received through the default tone set/tone position is a dummy carrier. This represents a case in which the unit cannot receive a tone-change instruction command due to noises and set tone-position information is incorrect. In this case, the unit cancels the tone-position setting of its own, inquires about a tone position similarly to the case of new connection, and resets a tone position in accordance with present tone-position information.

Then, tone set/tone position change operations are described below. This embodiment uses the concept of a virtual master when tone sets/tone positions are changed between existing units connected to the same power line 7. Specifically, a unit judging that it is difficult to continue communication through a present tone set/tone position in accordance with a nose measurement result among a plurality of units connected to the same power line 7 serves as a virtual master for changing tones, performs a series of processing such as transmission of change request and desired change destination, arbitration with other unit, and change instruction and designation of change destination, and determines a change-destination tone.

For example, a unit serving as a virtual master transmits a tone-change request command (refer to Fig. 17) and waits for a response from other unit for a certain time. When receiving a tone-change rejection command even once during the above period, the virtual-master unit stops a tone change and completes virtual-master processing. However, when receiving no tone-change rejection command even after a certain time passes, the virtual-master unit transmits a tone-change instruction command (refer to Fig. 17). Then, all presently-connected units simultaneously change tones when receiving the tone-change instruction command.

Processing sequence of the virtual-master unit and units other than the virtual-master unit of this embodiment are described below in detail. The processing is mainly controlled by control units 10 of the virtual-master unit and unit other than the virtual-master unit.

Fig. 18 is a flow chart showing a processing sequence of the virtual-master unit and units other than the virtual-master unit of this embodiment. First, a unit judging that it is difficult to continue communication through a present tone set/tone position in accordance with a noise measurement result servers as a virtual master for a tone change to start virtual-master processing. The control circuit 10 of the virtual master selects a tone set or tone position desiring a change (step S11) and transmits a tone-change request command (refer to Fig. 17) showing the selected tone set or tone position to the power line 7 (step S12).

Every unit other than the virtual master receives the tone-change request command (step S21) and judges whether to change the tone sets/tone positions (step S22). The whole communication data is received at a physical-layer level of each unit independently of whether the data transmitted to the power line 7 is addressed to the unit of its own. When the data is addressed to the unit of its own, the unit delivers a data field to a high-order layer.

When judging that a change of tone sets/tone positions is rejected (No in step S23), every unit other than the virtual master generates a tone-change rejection command (refer to Fig. 17) and transmits the rejection command to the virtual-master unit (step S24) to complete the change. However, when every unit previously receives a tone-change rejection command from other unit except the virtual master, the unit cancels transmission of the tone-change rejection command of its own. However, when judging that a change of tone sets/tone positions is not rejected (Yes in step S23), every unit other than the virtual master starts the processing in step S25.

Moreover, the virtual-master unit transmits the tone-change request command showing a tone set or tone position selected through the processing in step S12 to the power line 7 and then, judges whether to receive a tone-change rejection command from any unit other than the virtual master (steps S13 and S14). When receiving a tone-change rejection command before the predetermined time elapses (No in step S13 and Yes in step S14), the virtual-master unit judges that at leas one unit other than the virtual master rejects a change of tone sets/tone positions and stop the change of tone sets/tone positions to complete virtual-master processing (step S15). In this case, though the virtual master processing is completed, it is also permitted to restart step S11 without completing the virtual-master processing, reselect a tone set/tone position different from the previously selected tone set/tone position, and continue the virtual-master processing until tone sets/tone positions can be changed.

However, when a tone-change rejection command is not received before the predetermined time elapses (No in step S14 and Yes in step S13), the virtual-master unit judges that every unit other than the virtual master acknowledges a change of tone sets/tone positions and moreover, generates a tone-change instruction command showing a change-destination tone set/tone position (refer to Fig. 17) to transmit the command to every unit other than the virtual master (step S16).

Then, the virtual-master unit changes the tone set/tone position presently used for transmission and reception to the tone set/tone position selected in step S11 (step S17) and completes the virtual-master processing after tone sets/tone positions are changed.

Moreover, when judging that a change of tone sets/tone positions is not rejected through the processing in step S23 (Yes in step S23), every unit other than the virtual master judges whether a tone-change rejection command is output from a unit other than the virtual master (step S25) and judges whether a tone-change instruction command is output from the virtual-master unit (step S26).

For example, when a tone-change rejection command is received from a unit other than the virtual master (Yes in step S25), a unit other than the virtual master rejects a change of tone sets/tone positions and completes the processing similarly to a case in which the unit of its own rejects a change. However, when a tone-change rejection command is not received from any unit other than the virtual master (No in step S25) but a tone-change instruction command is received from the virtual-master unit (Yes in step S26), the unit other than the virtual master judges that every unit other than the virtual master acknowledges a change of tone sets/tone positions and moreover, changes a tone set/tone position to a change destination instructed by the tone-change instruction command (step S27), and completes the processing after the change. In this case, all units other than the virtual master simultaneously change the tones. To change the tone sets/tone positions, it is also permitted to set change-time information or change-timing information to the tone-change instruction command so that all units can simultaneously change the tone sets/tone positions.

Operations for changing units newly connected to the power line 7 are described below. For example, because a newly-connected unit does not know a tone set/tone position presently used to transceive data, it immediately transmits a tone-confirmation inquiry command to all existing units by using a default tone set/tone position (refer to Fig. 17) and inquires about present tone set and tone position.

Then, a unit first responding the inquiry among other units connected to the power line 7 transmits a tone-confirmation response command to the default tone set/tone position (refer to Fig. 17) and replies a tone set/tone position used to transceive data. In this case, because the other unit(s) can confirm the reply by using a default tone set/tone position, the unit(s) cancels the reply when the unit already prepares other reply.

A newly-connected unit receiving the reply changes settings so as to perform subsequent transmission and reception of data through a change-destination tone set/tone position. This processing is executed not only by the newly-connected unit but also by a unit which cannot receive a tone-change instruction command due to noises and to which incorrect tone-position information is set. Moreover, it is permitted that all existing units regularly perform the processing.

Thus, in the case of this embodiment, a unit requesting a change of tone sets/tone positions serves as a virtual master among unit connected to the same power line 7 and presently performing communication, and the unit serving as the virtual master transmits a tone-change request command to units other than the virtual master and changes tone sets/tone positions in accordance with reactions of units other than the virtual master. Thereby, it is possible to securely change tone sets/tone positions in accordance with a state of each unit.

Moreover, in the case of this embodiment, even when tone sets/tone positions are change, a newly-connected unit and a unit to which incorrect tone set/tone position is set use default tone set and tone position in order to inquire about a present tone set/tone position. Thereby, it is possible that the newly-connected unit and the unit to which incorrect tone set/tone position is set quickly change the default tone set/tone position to the present tone set/tone position.

A case is described in this embodiment in which the same data is encoded to tones constituting each of the tone positions. However, this embodiment is not restricted to the above case. It is also permitted to encode individual data in accordance with a noise state of the power line 7. The same is true for subsequent embodiments.

Moreover, a case is described in this embodiment in which tones are not changed when a tone-change rejection command is output from at least one unit other than a virtual master. However, this embodiment is not restricted to the above case. It is also permitted not to change tones when tone-change rejection commands are output from a predetermined number of units or more other than a virtual master. Furthermore, it is permitted to use a tone-change permission command and determine whether to change tone sets/tone positions in accordance with the majority rule between the number of tone-change rejection commands and the number of tone-change permission commands. The same is true for subsequent embodiments.

Features of an eighth embodiment of a power line modem of the present invention are described below. The above-described seventh embodiment realizes secure communication by transmitting tone-change request and rejection commands. In the case of real power-line communication, however, it is probably impossible to securely receive a command through one-time communication because a communication state of a power-line modem requiring a change of tones is normally deteriorated due to noises. Therefore, in the case of eighth embodiment, command transmission is repeated a plurality of times so as to more securely perform a change by assuming a case in which a tone-change request command or tone-change rejection command cannot be transceived one time. Because the configurations of this embodiment is the same as that of the seventh embodiment previously described, description of the configuration is omitted by using same legends.

Operations of this embodiment for a change of tones are described below. First, the outline of a change of tone sets/tone positions of this embodiment is briefly described below. For example, a virtual-master unit transmits a tone-change request command to a unit other than the virtual master up to N times every certain time T. When the virtual-master unit receives a tone-change rejection command even once before N times pass, it stops a change and completes virtual-master processing. However, when the virtual-master unit does not receive a tone-change rejection command even after N times pass, it transmits a tone-change instruction command. It is the same as the case of the seventh embodiment that all units connected to a power line 7 simultaneously change tones when receiving a tone-change instruction command.

A unit other than the virtual master transmits a tone-change rejection command when receiving a tone-change request command but rejecting a change of tones. However, when previously receiving a tone-change rejection command from a unit other than the virtual master, another unit other than the virtual master cancels transmission of the tone-change rejection command of its own. Moreover, when receiving a tone-change request command again within a certain time though receiving a tone-change rejection command, a unit other than the virtual master judges that the virtual-master unit cannot receive the last tone-change rejection command and transmits a tone-change rejection command again.

Moreover, because the virtual-master unit waits to receive a tone-change rejection command for a certain time $T = t \times N$, a unit other than the virtual master judges that a this-time tone-change request is canceled when receiving no tone-change instruction command even after a certain time passes and completes a change of tone sets/tone positions under the above state.

Processing sequence of a virtual-master unit and a unit other than the virtual master of this embodiment are described below in detail. Fig. 19 is a flow chart showing the processing sequence of the virtual master of this embodiment. The same steps as those in Fig. 18 are provided with the same step numbers and their description is omitted.

For example, the virtual-master unit selects a tone set/tone position to be changed in step S11 and thereafter, resets a counter for counting values up to N and a timer for measuring time up to t (step S30) and then, transmits a tone-change request command in step S12.

After transmitting the tone-change request command, the virtual-master unit starts the timer to judge whether to receive a tone-change rejection command from a unit other than the virtual master before the predetermined time t elapses (steps S13 and S14).

Then, when receiving a tone-change rejection command from a unit other than the virtual master within the predetermined time t (No in step S13 and Yes in step S14), the virtual-master unit stops a change of tone sets/tone positions through the processing in step S15 and completes virtual-master processing. Moreover, it is permitted to continue the virtual-master processing from step S11 similarly to the case of the seventh embodiment.

However, when receiving no tone-change rejection command from a unit other than the virtual master within the predetermined time t (Yes in step S13), the virtual-master unit increments a counter value n by '1', resets the timer (step S31), and judges whether the counter value n is larger than the maxim number of times N (step S32).

Then, when the counter value is smaller than the predetermined maximum number of times N (No in step S32), the virtual-master unit judges that a tone-change request command is not transmitted up to N times for a certain time $T = t \times N$, retransmits a tone-change request command showing a tone set/tone position to be changed (step S33), restarts step S13, and judges whether to receive a tone-change rejection command from a unit other than the virtual master within the predetermined time t.

However, when the counter value n is larger than the predetermined maximum number N (Yes in step S32), the virtual-master unit transmits a tone-change request command up to N times for a certain time T, judges that every unit other than the virtual master acknowledges a change of tone sets/tone positions, and transmits a tone-change instruction command showing a change-destination tone set/tone position (step S16) and changes transceiving tone sets/tone positions of the unit of its own (step S17).

Fig. 20 is a flow chart showing processing sequence of a unit(s) other than the virtual master of this embodiment. In this flow chart, the same steps as those in Fig. 18 are provided with the same step numbers and their description is omitted.

For example, a unit other than a virtual master resets a timer after receiving a tone-change request command in step S21 (step S41) and judges whether to change tone sets/tone positions (step S22). As a result, when tone sets/tone positions can be changed (Yes in step S23), the unit other than the virtual master judges whether to receive a tone-change instruction command from the virtual master before a predetermined time t×N elapses (steps S42 and s43).

In this case, when receiving a tone-change instruction command from the virtual-master unit before the predetermined time t×N elapses (No in step S42 and Yes in step S43), the unit other than the virtual master judges that a unit other than the virtual master acknowledges a change of tone sets/tone positions, changes a tone set/tone position to a change destination designated by a tone-change instruction command sent from the virtual master unit (step S27) similarly to the case of the seventh embodiment, and completes the processing after completing the change.

However, when it is impossible to receive a tone-change instruction command from the virtual-master unit even after the predetermined time t×N elapses (No in step S43 and Yes in step S42), the unit other than the virtual master judges that at least one unit other than the virtual master has rejected a change of tone sets/tone positions and completes the processing similarly to the case of the seventh embodiment.

Moreover, when a change is impossible as a result of judgement on the change in step S23 (No in step S23), the unit other than the virtual master judges whether a tone-change rejection command is received from an another unit different from the virtual master (step S25). When a tone-change rejection command is not received from the another unit (No in step 25), the another unit transmits a tone-change rejection command (step S24). Moreover, the unit other than the virtual master judges whether to receive a ton-change instruction command from the virtual-master unit before the predetermined time t×N at the unit side other than the virtual master elapses (steps S44 and S26). When a tone-change rejection command is received from another unit other than the virtual master in accordance with the judgment in step S25 (Yes in step S25), the other unit judges whether to receive a tone-change instruction command from the virtual-master unit before the predetermined time t×N at the unit other than the virtual master elapses (steps S44 and S26).

In this case, when a tone-change instruction command cannot be received from the virtual-master unit even after the predetermined time t×N elapses (Yes in step S44), the unit other than the virtual master judges that at least one unit other than the virtual master has rejected a change of tone sets/tone positions and completes the processing.

However, when a tone-change instruction command is received before the predetermined time t×N elapses (No in step S44 and Yes in step S26), the unit other than the virtual master judges that every unit other than the virtual master has acknowledged a change of tone sets/tone positions, changes a tone set/tone position to a change destination designated by a tone-change instruction command sent from the virtual-master unit (step S27), and completes the processing after completing the change.

Moreover, when a tone-change instruction command is not received from the virtual-master unit before the predetermined time t×N elapses (No in step S44 and No in step S26), the unit other than the virtual master judges whether a tone-change request command is received again from the virtual master before the predetermined time t×N elapses (step S45) and whether a tone-change rejection command is received from another unit other than the virtual master (step S46).

In this case, when a tone-change request command is not received again from the virtual-master unit (No in step S45) or when a tone-change request command is received again from the virtual-master unit and a tone-change rejection command is received from another unit other than the virtual master (Yes in step S45 and Yes in step S46), step S44 is re-executed.

However, when a tone-change request command is received again from the virtual-master unit but a tone-change rejection command is not received from another unit other than the virtual master (Yes in step S45 and No in step S46), the unit of its own retransmits a tone-change rejection command and then, starts step S44. When a tone-change request command is received again from the virtual-master unit and a tone-change rejection command is received from another unit other than the virtual master (Yes instep S45 and Yes in step S46), it is also permitted to complete the above processing without shifting to the judgment in step S44.

Operations for changing a unit newly connected to the power line 7 are described below. First, because the newly-connected unit does not know a tone set/tone position presently used for communication similarly to the case of the seventh embodiment, it immediately transmits a tone-confirmation inquiry command (refer to Fig. 17) to all existing units by using a default tone set/tone position to inquire about the present tone set and tone position.

In this case, when inquiry is performed only once, other units cannot probably receive a tone-confirmation inquiry command or the newly-connected unit cannot probably receive a tone-confirmation response command. Therefore, this embodiment transmits a tone-confirmation inquiry command a plurality of times similarly to operations for changing tone sets/tone positions between existing units. Thereby, it is possible to securely know a moving destination.

That is, in the case of this embodiment, a newly-connected unit immediately repeats an inquiry about a tone set/tone position used to transceive data every certain time until receiving a response by using a default tone set/tone position. A unit capable of first responding to the inquiry among other units already connected responds to the inquiry by using a default tone set/tone position. Then, other units already preparing a response cancel the response when it is confirmed that any unit already responded.

The newly-connected unit receives the response and change setting so as to perform subsequent transmission and reception through a change-destination tone set/tone position. However, when a response is not sent from other units even after repeatedly transmitting a tone-confirmation inquiry command, the newly-connected unit judges that no other unit is connected and performs subsequent transmission and reception through a default tone set/tone position.

Also when a carrier is detected only through a default tone position but reception data at the default position is a dummy carrier, operations same as the case in which a communication system is newly connected are performed.

Thus, in the case of this embodiment, a unit requesting a change of tone sets/tone positions serves as a virtual master among units connected to the same power line 7 and performing communication and the virtual-master unit transmits a tone-change request command to units other than the virtual master a plurality of times and changes tone sets/tone positions in accordance with reactions of the units other than the virtual master. Thereby, it is possible to more securely change tone sets/tone positions correspondingly to a state of each unit.

Moreover, in the case of this embodiment, even when tone sets/tone positions are changed, a newly-connected unit and a unit to which an incorrect tone set/tone position is set uses a default tone set/tone position in order to inquire about present tone set and tone position. Thereby, the newly-connected unit and the unit to which the incorrect tone set/tone position is set can quickly change a tone set/tone position to a present tone set/tone position used to transceive data.

Furthermore, in the case of this embodiment, it is possible to securely perform a change by assuming a case in which a tone-change request or tone-change rejection command cannot be transmitted by one time and transmitting a command a plurality of times. Therefore, it is possible to provide a robust power communication system even under a state to be probably influenced by noises particularly output from a factory or a power supply.

INDUSTRIAL APPLICABILITY

As described above, a communication system of the present invention is useful for communication using a transmission line which may be influenced by noises, particularly suitable for a power-line modem for performing data communication by using an existing power line (electric-lamp line).

**Claims**

1. A communication method using a multicarrier modulation-demodulation mode, characterized by including:

   a first step in which transmission side encodes the same data to n (n is a natural number such that m>n≥2) tones in a specific tone set constituted of m (m is a natural number such that m≥3) tones at a predetermined frequency interval and transmits encoded multitone data;
   a second step in which reception side receiving the multitone data instructs the transmission side and other unit(s) to change at least one of the n tones when the reception side cannot decode the encoded data with some or all of the n tones or the decoding is difficult; and
   a third step in which the transmission side receiving a tone-change instruction, the other unit, and the reception side instructing a tone change tones in accordance with the Instruction and perform subsequent communication with a changed tone.

2. The communication method according to claim 1, characterized in that, when the transmission side, the other unit(s), and the reception side change at least one of the n tones, they transmit encoded multitone data again by using remaining tones in the tone set in the third step.

3. The communication method according to claim 1, characterized by further including:

   a fourth step in which reception side receiving the multitone data judges a change-destination tone set and instructs the transmission side and other unit(s) to change the tone sets when the reception side cannot decode the encoded data even by using any tone in the tone set or the decoding is difficult after the processing in the third step; and
   a fifth step in which the transmission side receiving the tone-set change instruction, the other unit(s), and the reception side instructing the tone set change tone sets in accordance with the tone-set change instruction and perform subsequent communication with a changed tone set.

4. The communication method according to claim 1, characterized in that

   units on the transmission and reception sides to be communicated each other use the specific tone set in order to determine a tone set used for transceiving of data and transceive data by using a tone set other than the specific tone set and a tone set presently communicated between other units on the same transmission line.

5. A communication method using a multicarrier modulation-demodulation mode, characterized by including:

a first step in which transmission side encodes the same data to a specific tone set constituted of m (m is a natural number such that m≥3) tones at a predetermined frequency interval and transmits encoded multitone data; and

a second step in which reception side receiving the multitone data decodes the encoded data by using n (n is a natural number such that m>n≥2) tones in a specific tone set, changes at least one of the n tones when the encoded data cannot be decoded with some or all of the n tones or the decoding is difficult and thereafter, decodes the encoded data again by using n changed tones.

6. The communication method according to claim 5, characterized in that in the second step ended data is decoded again by using remaining tones in the tone set when changing at least one of the n tones.

7. The communication method according to claim 5, characterized by further including:

a third step of judging change-destination tone sets when the encoded data cannot be decoded even by using any tone in the tone set through the processing in the second step or the decoding is difficult and instructing the transmission side and other unit(s) to change the tone sets; and

a fourth step in which the transmission side receiving a tone-set change instruction, the other unit(s), and the reception side instructing a change of tone sets change tone sets in accordance with the instruction and perform subsequent communication with a changed tone set.

8. The communication method according to claim 5, characterized in that

units on the transmission and reception sides to be communicated each other use the specific tone set in order to determine a tone set used for transceiving of data and transceive data by using a tone set other than the specific tone set and a tone set presently communicated between other units on the same transmission line.

9. The communication method according to claim 5, characterized in that

in the second step encoded data is decoded by using the m tones when receiving first multitone data, n optimum tones are detected, then the encoded data is decoded by using the n detected tones, at least one of the n tones is changed when the encoded data cannot be decoded by some or all of the n tones, and the encoded data is again decoded by using n changed tones.

10. The communication method according to claim 9, characterized by further including:

a third step of judging a change-destination tone set when the encoded data cannot be decoded by the processing in the second step even by using any tone in the tone set or the decoding is difficult and instructing the transmission side and other unit(s) to change tone sets; and

a fourth step in which the transmission side receiving a tone-set change instruction, the other unit(s), and the reception side instructing a tone-set change change tone sets in accordance with the instruction and perform subsequent communication with a changed tone set.

11. A communication method characterized by including:

a first step in which the multicarrier modulation-demodulation mode is used and transmission side encodes the same data to n (n is a natural number such that m>n≥2) tones in a specific tone set constituted of m (m is a natural number such that m≥3) at a predetermined frequency interval and transmits encoded multitone data;

a second step in which reception side receiving the multitone data requests a tone change to the transmission side and other unit(s) connected to the same transmission line when the encoded data cannot be decoded by some or all of the n tones or the decoding is difficult;

a third step in which the transmission side receiving the tone change request and the other unit(s) respectively designate and return an optimum tone to the reception-side unit;

a fourth step in which the reception side to which the optimum tone is designated determines a tone to be changed in accordance with the information and communicates a determined tone to the transmission side and other unit(s); and

a fifth step in which the transmission side, reception side, and other unit(s) change tones in accordance with the determination and perform subsequent communication with a changed tone.

12. A communication method for a plurality of communication systems connected to the same transmission line to transceive multitone data constituted of a plurality of predetermined tones at a specific frequency interval by using a multicarrier modulation-demodulation mode, characterized in that

when a communication system judging that decoding cannot be made by some or all of the tones or the decoding is difficult becomes a master,

the communication system serving as the master transmits a tone-change request command showing a change-destination tone, and when receiving a tone-change rejection command from at least one of other communication systems in a certain time, completes the tone change and master processing at this point of time, but unless receiving the tone-change rejection command in a certain time, the master transmits the tone-change designation command showing the change-destination tone and moves a tone used to transceive data to the change destination, and

all communication systems other than the master receive the tone-change designation command and thereafter, simultaneously move tones used to transceive data to the change destination.

13. The communication method according to claim 12, characterized by using n (n is a natural number such that m>n≥2) tones in a predetermined tone set constituted of m (m is a natural number such that m≥3) tones at a specific frequency interval to transceive data between the communication systems and encoding the same data to the n tones.

14. The communication method according to claim 12, characterized in that

when at least one of communication systems other than the master transmits a tone-change rejection command in the certain time, communication systems other than the master cancel the transmission of tone-change rejection commands of their own.

15. The communication method according to claim 12, characterized in that

a default tone set showing an initial-state tone set and a default tone position which is a combination of initial-state tones in the default tone set are previously defined, and

the communication system performs carrier sense of the default tone position whenever data is not transceived before executing tone change processing and moreover performs carrier sense of a tone position used to transceive data in addition to carrier sense of the default tone position after executing tone change processing.

16. The communication method according to claim 15, characterized by transmitting data through the changed tone when a communication system transmits data after executing tone change processing and at the same time, transmits a dummy carrier to the default tone position.

17. A communication method according to claim 15, characterized by performing reception processing through the change-destination tone position when a carrier is detected through the default tone position and the change-destination tone position.

18. The communication method according to claim 15, characterized by performing reception processing through the default tone position when a carrier is detected through only the default tone position.

19. A communication method according to claim 15, characterized in that

when a new communication system is connected to the same transmission line,

the new communication system transmits a tone-confirmation inquiry command by using the default tone position and thereby, inquires all other communication systems about a tone position used to transceive data, and

a communication system first responding to the inquiry transmits a tone-confirmation response command by using the default tone position and thereby transmits a tone position used to transceive data, and the new communication system changes tones used to transceive data in accordance with the received tone-confirmation response command.

20. The communication method according to claim 15, characterized in that

when though a carrier is detected at a default position but the received data at the default position is a dummy carrier, then

a communication system detecting the carrier transmits a tone-confirmation inquiry command by using the default tone position and thereby, inquires all other communication systems about a tone position used to transceive data, and

a communication system first responding to the inquiry transmits a tone-confirmation response command by using the default tone position and thereby transmits the tone position used to transceive data, and the communication system detecting the carrier changes tones used to transceive data in accordance with the received tone-confirmation response command.

21. A communication method for a plurality of communication systems connected to the same transmission line to transceive multitone data constituted of a plurality of predetermined tones at a specific frequency interval by using a multicarrier modulation-demodulation mode, characterized in that

when a communication system judging that some or all of the tones cannot be decoded or the decoding is difficult serves as a master for changing the tones, the master communication system transmits a tone-change request command showing a change-destination tone N (N is a natural number such that N≥2) times every a certain time, and when receiving a tone-change rejection command from at least one of other communication systems up to N times, completes the tone change and master processing at this point of time but when receiving no tone-change rejection command up to N times, moves a tone used to transceive data to the change destination, and moreover transmits a tone-change instruction command showing the change-destination tone, and all communication systems other than the master receive the tone-change instruction command and thereafter simultaneously move tones used to transceive data to the change destination.

22. The communication method according to claim 21, characterized in that

when at least one of the communication systems other than the master transmits a tone-change rejection command before transmitting the tone-change request command up to N times, other communication systems except the master cancel the transmission of tone-change rejection commands of their own.

23. The communication method according to claim 21, characterized in that

a default tone set showing an initial-state tone set and a default tone position which is a combination of initial-state tones in the default tone set are previously defined, and

the communication system always performs carrier sense of the default tone position whenever no data is transceived before executing tone change processing and moreover performs carrier sense of a tone position used to transceive data in addition to the carrier sense of the default tone position after executing tone change processing.

24. The communication method according to claim 23, characterized in that, when a communication system transmits data after executing tone change processing, it transmits the data by using the change-destination tone and simultaneously transmits a dummy carrier to the default tone position.

25. The communication method according to claim 23, characterized in that, when a carrier is detected through the default tone position and the change-destination tone position, reception is performed through the change-destination tone position.

26. The communication method according to claim 23, characterized in that reception processing is performed through the default tone position when a carrier is detected only through the default tone position.

27. The communication method according to claim 23, characterized in that, when a new communication system is connected to the same transmission line, the new communication system transmits a tone-confirmation inquiry command a plurality of times by using the default tone position, thereby inquires all other communication systems about a tone position used to transceive data, and a communication first responding to the inquiry transmits a tone-confirmation response command by using the default tone position and thereby, transmits the tone position used to transceive data, and the new communication system changes tones used to transceive data in accordance with the received tone-confirmation response command.

28. The communication method according to claim 23, characterized in that

when a carrier is detected only through a default tone position but received data at the default tone position is a dummy carrier, then a communication system detecting the carrier transmits a tone-confirmation inquiry command by using the default tone position and inquires all other communication systems about a tone position used to transceive data, and a communication system first responding to the inquiry transmits a tone-confirmation response command by using the default tone position and thereby transmits the tone position used to transceive data, and the communication system detecting the carrier changes tones used to transceive data in accordance with the received tone-confirmation response command.

29. A communication system using a multicarrier modulation-demodulation mode, characterized by:

encoding the same data to n (n is a natural number such that m>n≥2) tones in a specific tone set constituted of m (m is a natural number such that m≥3) tones at a predetermined frequency interval and transmitting encoded multitone data;
changing at least one of the n tones to a remaining tone in the tone set when the encoded data cannot be decoded by some or all of the n tones and a tone change instruction is received from reception side and performing subsequent communication with changed tones.

30. The communication system according to claim 29, characterized by changing a tone set to any other tone set when the encoded data cannot be decoded even by using any tone in the tone set and a tone set change instruction is received from reception side and performing subsequent communication through the changed tone set.

31. A communication system using a multicarrier modulation-demodulation mode, characterized by:

receiving multitone data superimposed on n (n is a natural number such that m>n≥2) tones in a specific tone set constituted of m (m is a natural number such that m≥3) tones from transmission side; and
instructing the transmission side and other units to change at least one of the n tones when encoded data cannot be decoded by some or all of the n tones.

32. The communication system according to claim 31, characterized by judging a change-destination tone set when the encoded data cannot be decoded even by using any tone in the tone set and instructing the transmission side and other units to change tone sets.

33. A communication system using a multicarrier modulation-demodulation mode, characterized by encoding the same data to a specific tone set constituted of m (m is a natural number such that m≥3) tones at a predetermined frequency interval and transmitting encoded multitone data.

34. The communication system according to claim 33, characterized by changing the tone set to any other tone set in accordance with a tone-set change instruction when the encoded data cannot be decoded even by using any tone in the tone set and the instruction is received from reception side and performing subsequent communication through a changed tone set.

35. A communication system using a multicarrier modulation-demodulation mode, characterized by:

receiving multitone data superimposed on a specific tone set constituted of m (m is a natural number such that m≥3) tones from transmission side;
decoding encoded data in accordance with n (n is a natural number such that m>n≥2) tones in the tone set;
changing at least one of the n tones to a remaining tone in the tone set when the encoded data cannot be decoded by some or all of the n tones; and
decoding the encoded data again in accordance with changed n tones.

36. The communication system according to claim 35, characterized by instructing the transmission side to change tone sets when the encoded data cannot be decoded even by using any tone of the tone set.

37. The communication system according to claim 35, characterized by decoding encoded data in accordance with the m tones when receiving first multitone data, moreover detecting n optimum tones, then decoding the encoded data in accordance with the n detected tones, changing at least one of the n tones when the encoded data cannot be decoded through some or all of the n tones, and decoding the encoded data again in accordance with n changed tones.

38. A communication system using a multicarrier modulation-demodulation mode, characterized by transceiving multitone data constituted of a plurality of predetermined tones at specific frequency intervals, moreover transmitting a tone-change request command showing a change-destination tone when the communication system judges that decoding cannot be made by some or all of the tones or the decoding is difficult and becomes a master for executing tone change processing, completing the tone change and master processing when receiving a tone-change rejection command from at least one of other communication systems within a certain

**EP 1 065 818 A1**

time, moving a tone to be used to transceive data to the change destination when not receiving the tone-change rejection command, and moreover transmitting a tone-change instruction command showing the change-destination tone.

39. A communication system using a multicarrier modulation-demodulation mode, characterized by transceiving multitone data constituted of a plurality of predetermined tones at a specific frequency interval, transmitting a tone-change request command showing a change-destination tone N (N is a natural number such that N≥2) times every a certain time when the communication system judges that decoding cannot be made by some or all of the tones or the decoding is difficult and becomes a master for executing tone change processing, completing the tone change and master processing when receiving a tone-change rejection command from at least one of other communication systems before the repetition of transmission of the tone-change request command up to N times, moving a tone to be used to transceive data to the change destination when not receiving the tone-change rejection command before the repetition of transmission of the tone-change request command up to N times, and moreover transmitting a tone-change instruction command showing the change-destination tone.

40. A communication system for transceiving multitone data constituted of a plurality of predetermined tones at a specific frequency interval by using a multicarrier modulation-demodulation mode, characterized by moving a tone to be used to transceive data to the change destination after receiving a tone-change instruction command showing a change-destination tone when the communication system does not serve as a master for changing tones.

# FIG.1

TRANSMISSION DATA → FRAMING CIRCUIT (1) → QAM ENCODER (2) → TONE SELECTOR (3) → IFFT (4) → P/S (5) → D/A (6)

TRANSMISSION CONTROL CODE

TONE SELECTION INFORMATION

CONTROL CIRCUIT (10)

NOISE INFORMATION

NOISE MEASUREMENT DEVICE (9)

COUPLED CIRCUITS (8)

TRANSMISSION LINE (7)

RECEPTION CONTROL CODE

RECEPTION DATA ← DEFRAMING CIRCUIT (11) ← QAM DECODER (12) ← TONE SELECTOR (13) ← FFT (14) ← S/P (15) ← A/D (16)

EP 1 065 818 A1

# FIG.2

EP 1 065 818 A1

| TRANSMISSION DATA |
|:---:|

⬇ DATA DIVISION

| | | | | | | TRANSMISSION DATA | | | | | | | |
|:---:|:---:|:---:|:---:|:---:|:---:|:---:|:---:|:---:|:---:|:---:|:---:|:---:|:---:|

⬇ FRAME GENERATION

| FRAME 1 | FRAME 2 | FRAME 3 | FRAME 4 | . . . . . . . . . . . . . | FRAME N |
|:---:|:---:|:---:|:---:|:---:|:---:|

| PREAMBLE | CONTROL CODE | DATA |
|:---:|:---:|:---:|

FIG.3

# FIG.4

(a)

(b)

| TONE POSITION | TONE No. CONSTITUTING SET POSITION ( IN THE CASE OF TONE SET 1 ) |
|---|---|
| Center | #40, #60, #80 |
| High | #60, #80, #100 |
| Low | #20, #40, #60 |

EP 1 065 818 A1

# FIG.5

POWER

ELECTRIC-LAMP INVERTER
NOISE OR THE LIKE

#20    #40    #60    #80    #100    FREQUENCY

EP 1 065 818 A1

FIG.6

POWER

ELECTRIC-LAMP INVERTER NOISE OR THE LIKE

#20  #40  #60  #80  #100  FREQUENCY

# FIG.7

ELECTRIC-LAMP INVERTER
NOISE OR THE LIKE

POWER

#20    #40    #60    #80    #100    FREQUENCY

EP 1 065 818 A1

# FIG.8

# FIG.9

TRANSMISSION SIDE

RECEPTION SIDE

Data

(1)

(2)    (TONE-POSITION
ACK   CHANGE REQUEST)

(3)

(4)        (CHANGE
Data   ACKNOWLEDGMENT)

TRANSFER WITH A
TONE BEFORE THE
CHANGE

TRANSFER WITH A
TONE BEFORE THE
CHANGE

(5)

TRANSFER WITH A
TONE AFTER THE
CHANGE

ACK      (6)

TRANSFER WITH A
TONE AFTER THE
CHANGE

Data

EP 1 065 818 A1

# FIG.10

(a)

(b)

| TONE SET No. | TONE No. CONSTITUTING TONE SET |
|---|---|
| TONE SET (1) | #20, #40, #60, #80, #100 |
| TONE SET (2) | #19, #39, #59, #79, #99 |
| (OMITTED) | (OMITTED) |
| TONE SET (19) | #2, #22, #42, #62, #82 |
| TONE SET (20) | #1, #21, #41, #61, #81 |

EP 1 065 818 A1

# FIG.11

VARIOUS NOISES

POWER

#20    #40    #60    #80    #100    FREQUENCY

EP 1 065 818 A1

# FIG.12

POWER

VARIOUS NOISES

#10  #20  #30  #40  #50  #60  #70  #80  #90  #100  FREQUENCY

EP 1 065 818 A1

# FIG.13

UNIT A          UNIT B                    UNIT C                UNIT D

Data (TONE-POSITION CHANGE REQUEST) ~ S1
ACK (CHANGE ACKNOWLEDGMENT)

Data
ACK
Data ~ S2
NACK
Data
ACK

Data (TONE-POSITION CHANGE REQUEST) S3
ACK (CHANGE ACKNOWLEDGMENT)

Data
ACK S4
Data
NACK
Data
ACK

S5
Data (TONE-POSITION CHANGE REQUEST)
ACK (CHANGE ACKNOWLEDGMENT)

Data
ACK ~ S6

EP 1 065 818 A1

# FIG.14

EP 1 065 818 A1

(a)

TONE No.

#0 #1 #2 #3 #4 #5 ・・・・・・・・・・・・・・・・・・・ #99 #100

#32   #48   #64   #80   #96

f (FREQUENCY)

(b)

| TONE SET No. | TONE No. CONSTITUTING TONE SET |
|---|---|
| TONE SET (0) | #32, #48, #64, #80, #96 |
| TONE SET (1) | #31, #47, #63, #79, #95 |
| (OMITTED) | (OMITTED) |
| TONE SET (14) | #18, #34, #50, #66, #82 |
| TONE SET (15) | #17, #33, #49, #65, #81 |

⇐ DEFAULT TONE SET

# FIG.15

(a)

(b)

| TONE POSITION | TONE No. CONSTITUTING TONE POSITION (IN THE CASE OF TONE SET 1) |
|---|---|
| Low | #32, #48, #64 |
| Center | #48, #64, #80 |
| High | #64, #80, #96 |

⇐ DEFAULT TONE POSITION

EP 1 065 818 A1

FIG.16

# FIG.17

| COMMAND (2bit) | | SUBCOMMAND (2bit) | | TONE POSITION INFORMATION (SET: 4 BITS POSITION: 2 BITS) | |
|---|---|---|---|---|---|
| NON | [00] | RESERVED | [xx] | NONE | |
| TONE CONFIRMATION | [01] | INQUIRY | [00] | NONE | |
| | | RESPONSE | [01] | PRESENT TONE | [sssspp] |
| | | RESERVED | [10] | NONE | |
| | | RESERVED | [11] | NONE | |
| TONE CHANGE | [10] | REQUEST | [00] | DESIRE-DESTINATION TONE | [sssspp] |
| | | REJECTION | [01] | NONE | |
| | | INSTRUCTION | [10] | CHANGE-DESTINATION TONE | [sssspp] |
| | | RESERVED | [11] | NONE | |
| RESERVED | [11] | RESERVED | [xx] | NONE | |

TONE SET NOS 0 TO 15 ARE SHOWN BY FOUR BITS OF SET POSITION OF TONE POSITION INFORMATION
TWO BITS OF POSITION OF TONE POSITION INFORMATION ARE USED AS
  "00" =CENTER
  "01" =LOW
  "00" =HIGH
AND "11" =RESERVED

EP 1 065 818 A1

# FIG.18

PROCESSING TO BE
EXECUTED BY
VIRTUAL MASTER

START OF VIRTUAL
MASTER PROCESSING

SELECT TONE SET/TONE
POSITION TO BE CHANGED — S11

TRANSMIT CHANGE-
REQUEST COMMAND
TRANSMIT (SHOWING OF
TONE SET/TONE POSITION
TO BE CHANGED) — S12

HAS SPECIFIED
TIME ELAPSED? — S13 Yes

No

IS CHANGE-
REJECTION COMMAND
RECEIVED? — S14

No

Yes — S15

END OF
UNCHANGEABLE
VIRTUAL MASTER
PROCESSING

TRANSMIT CHANGE-
INSTRUCTION COMMAND.
TRANSMIT (SHOWING OF
CHANGE-DESTINATION
TONE SET/TONE POSITION) — S16

CHANGE TRANSCEIVING
TONE SETS/TONE
POSITIONS OF ITS OWN — S17

END OF CHANGE-
COMPLETED VIRTUAL
MASTER PROCESSING

PROCESSINGS TO
BE EXECUTED BY
UNITS OTHER THAN
VIRTUAL MASTER

RECEPTION OF
CHANGE-REQUEST
COMMAND — S21

JUDGE WHETHER TO
CHANGE — S22

IS CHANGE OK? — S23 Yes

No

TRANSMIT CHANGE-
REJECTION COMMAND — S24

IS CHANGE-
REJECTION COMMAND
OF OTHER UNIT
RECEIVED? — S25

Yes

No

IS CHANGE
-INSTRUCTION
COMMAND
RECEIVED
? — S26

No

Yes

CHANGE TRANSCEIVING
TONE SETS/TONE
POSITIONS — S27

END

EVERY
UNIT
CHANGES
TONES.

45

# FIG.19

PROCESSING TO BE
EXECUTED BY
VIRTUAL MASTER

START OF VIRTUAL
MASTER PROCESSING

SELECT TONE SET/TONE
POSITION TO BE CHANGED — S11

RESET COUNTER N AND
RESET TIMER t — S30

TRANSMIT CHANGE-
REQUEST COMMAND
(SHOWING OF TONE SET/
TONE POSITION TO BE
CHANGED) — S12

HAS SPECIFIED
TIME t ELAPSED? — S13

Yes

RESET COUNTER n=n+1
AND TIMER t — S31

No

IS CHANGE-
REJECTION COMMAND
RECEIVED? — S14

No

N<n? — S32

Yes

No

RETRANSMIT CHANGE-
REQUEST COMMAND
(SHOWING OF TONE SET/
TONE POSITION TO BE
CHANGED) — S33

Yes

END OF
UNCHANGEABLE
VIRTUAL MASTER
PROCESSING — S15

TRANSMIT CHANGE-
INSTRUCTION COMMAND
(SHOWING OF CHANGE-
DESTINATION TONE SET/
TONE POSITION) — S16

CHANGE TRANSCEIVING
TONE SETS/TONE
POSITIONS OF ITS OWN — S17

END

# FIG.20

## INTERNATIONAL SEARCH REPORT

| International application No. |
| --- |
| PCT/JP99/07107 |

**A. CLASSIFICATION OF SUBJECT MATTER**
Int.Cl⁷ H04J11/00
Int.Cl⁷ H04J1/00

According to International Patent Classification (IPC) or to both national classification and IPC

**B. FIELDS SEARCHED**

Minimum documentation searched (classification system followed by classification symbols)
Int.Cl⁷ H04J11/00
Int.Cl⁷ H04J1/00

Documentation searched other than minimum documentation to the extent that such documents are included in the fields searched
Jitsuyo Shinan Koho          1926-2000
Kokai Jitsuyo Shinan Koho   1971-2000

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| E,X | JP, 11-266224, A (Nippon Telegr. & Teleph. Corp. <NTT>), 28 September, 1999 (28.09.99), page 5, left column, lines 7 to 31    (Family: none) | 33 |
| X | JP, 6-334573, A (Hitachi, Ltd.), 02 December, 1994 (02.12.94), page 5, left column, line 8 to right column, line 19 (Family: none) | 33 |
| E,X | JP, 11-215095, A (Jisedai Digital Television Hoso System Kenkyusho K.K.), 06 August, 1999 (06.08.99), page 4, right column, line 31 to page 5, right column, line 19; Figs. 1, 2, 3 (Family: none) | 40 |
| X | The Institute of Electronics, Information and Communication Engineers, "Hitaishogata Kosoku Cable Modem System", Lecture proceeding 2 distributed at the Society meeting in 1997,(Japan),13 August, 1997 (13.08.97),p.77Fig. 1 | 40 |
| A | JP, 8-149113, A (NEC Eng. Ltd.), | 1-40 |

☒ Further documents are listed in the continuation of Box C.          ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 02 March, 2000 (02.03.00) | 14 March, 2000 (14.03.00) |

| Name and mailing address of the ISA/ Japanese Patent Office | Authorized officer |
| --- | --- |
| Facsimile No. | Telephone No. |

Form PCT/ISA/210 (second sheet) (July 1992)

## INTERNATIONAL SEARCH REPORT

| International application No. |
| --- |
| PCT/JP99/07107 |

C (Continuation).    DOCUMENTS CONSIDERED TO BE RELEVANT

| Category* | Citation of document, with indication, where appropriate, of the relevant passages | Relevant to claim No. |
| --- | --- | --- |
| | 07 June, 1996 (07.06.96),<br>page 3, left column, lines 28 to 36; Fig. 2    (Family: none) | |

Form PCT/ISA/210 (continuation of second sheet) (July 1992)